# EUROPEAN PATENT APPLICATION

(11) **EP 4 852 342 A1**
(43) Date of publication of application: **09.12.2026**
(21) Application number: 25769675.7
(22) Date of filing: 12.03.2025
(51) Int. Cl.: H04B 7/185

(54) **COMMUNICATION METHOD AND SYSTEM, AND RELATED APPARATUS**

(30) Priority: 14.03.2024 CN 202410298196
(71) Applicant: HUAWEI TECHNOLOGIES CO., LTD., Shenzhen, Guangdong 518129 (CN)
(72) Inventor: ZHU, Xudong, Shenzhen, Guangdong 518129 (CN); GAN, Wenyu, Shenzhen, Guangdong 518129 (CN); QIAN, Feng, Shenzhen, Guangdong 518129 (CN); ZHANG, Yunji, Shenzhen, Guangdong 518129 (CN); LIU, Wei, Shenzhen, Guangdong 518129 (CN)
(74) Representative: Huawei European IPR
(86) International application number: PCT/CN2025/082074
(87) International publication number: WO 2025/190312

(57) **Abstract**

This application discloses a communication method and system, and a related apparatus. A terminal and a satellite device determine, based on positions of satellites of the satellite device and a position of the terminal, whether a specified satellite whose line-of-sight elevation angle is greater than a preset angle and whose line of sight is not obstructed in a line-of-sight direction exists. The satellite device may determine a paging mode based on whether the specified satellite exists. The terminal may determine, based on whether the specified satellite exists, a moment for sending uplink data and a network search mode. In this way, success rates of performing network searching and sending the uplink data by the terminal in a satellite network is increased, and a success rate of paging the terminal by the satellite device is increased.

## Description

This application claims priority to Chinese Patent Application No. 202410298196.0, filed with the China National Intellectual Property Administration on March 14, 2024 and entitled "COMMUNICATION METHOD AND SYSTEM, AND RELATED APPARATUS", which is incorporated herein by reference in its entirety.

### TECHNICAL FIELD

This application relates to the field of satellite communication technologies, and in particular, to a communication method and system, and a related apparatus.

### BACKGROUND

Currently, some terminals support a non-terrestrial network (non-terrestrial network, NTN) communication function. With development of communication technologies, increasing terminals will support the non-terrestrial network communication function. The terminals having the non-terrestrial network communication function may perform communication via satellites in areas that are not covered by mobile communication, that cannot be covered by mobile communication, or in which communication systems are damaged, for example, oceans, deserts, grasslands, high altitudes, or uninhabited areas.

A distance between a terminal and a satellite is long, and hardware of the terminal is limited. The terminal needs to cooperate with a user to perform a satellite alignment operation, so that the terminal can transmit communication data to the satellite and implement a non-terrestrial network communication function. Operations are complex and a communication effect is poor.

### SUMMARY

This application provides a communication method and system, and a related apparatus. A terminal and a satellite device determine, based on a position of a satellite of the satellite device and a position of the terminal, whether a specified satellite whose line-of-sight elevation angle is greater than a preset angle and whose line of sight is not obstructed in a line-of-sight direction exists. The satellite device may determine a paging mode based on whether the specified satellite exists. The terminal may determine, based on whether the specified satellite exists, a moment for sending uplink data and a network search mode. This increases success rates of network searching and uplink data sending by the terminal in a satellite network, and further increases a success rate of paging the terminal by the satellite device.

According to a first aspect, this application provides a communication method, applied to a terminal. The method includes: receiving, at a first moment, a first input for sending uplink data to a satellite device; and in response to the first input, sending the uplink data to a first satellite of the satellite device at a second moment if an included angle between a horizontal plane and a direction of a line of sight between any one of all satellites of the satellite device and the terminal is less than a preset angle and/or there is an obstruction in the direction of the line of sight between the satellite and the terminal. At the second moment, an included angle between the horizontal plane and a direction of a line of sight between the first satellite and the terminal is greater than the preset angle, and there is no obstruction in the direction of the line of sight between the first satellite and the terminal, and the second moment is later than the first moment. In this way, because the first satellite does not exist at the first moment, a probability that the terminal successfully sends the uplink data is low. Sending the uplink data by the terminal at the second moment can increase a success rate of sending the uplink data, and can further reduce power consumption caused by a plurality of failed attempts of the terminal to send the uplink data from the first moment.

In a possible implementation, the method further includes: in response to the first input, sending the uplink data to the first satellite if the included angle between the horizontal plane and the direction of the line of sight between the first satellite and the terminal is greater than the preset angle, and there is no obstruction in the direction of the line of sight between the first satellite and the terminal. In this way, when the first satellite exists, a success rate of sending the uplink data by the terminal to the first satellite is high, and the terminal sends the uplink data to the first satellite.

In some examples, in response to the first input, the uplink data is sent to the first satellite at a sending moment if the included angle between the horizontal plane and the direction of the line of sight between the first satellite and the terminal is greater than the preset angle, and there is no obstruction in the direction of the line of sight between the first satellite and the terminal, where the sending moment is the first moment. In this way, after determining that the first satellite exists, the terminal immediately sends the uplink data to the first satellite, thereby increasing a success rate of sending the uplink data by the terminal.

In a possible implementation, the method further includes: in response to the first input, performing network searching in a first network search mode if the included angle between the horizontal plane and the direction of the line of sight between any one of all the satellites of the satellite device and the terminal is less than the preset angle and/or there is an obstruction in the direction of the line of sight between the satellite and the terminal. The terminal performs network search at a third moment, a fourth moment, and a fifth moment in the first network search mode, a first time interval between the fourth moment and the third moment is greater than a second time interval between the fifth moment and the fourth moment, the third moment is earlier than the fourth moment, and the fourth moment is earlier than the fifth moment. In this way, when signal quality of a satellite network is poor (that is, no specified satellite exists), the terminal may perform network searching at a current moment at a low network search frequency. When the signal quality of the satellite network is poor, the terminal performs network searching at a low network search frequency, thereby reducing power consumption caused by a network search failure of the terminal. As time elapses, the first satellite moves to an area above the terminal, and a probability that the terminal successfully performs network searching increases. The terminal gradually increases a network search frequency, thereby ensuring that the terminal successfully performs network searching.

In a possible implementation, the method further includes: in response to the first input, performing network searching in a second network search mode if the included angle between the horizontal plane and the direction of the line of sight between the first satellite and the terminal is greater than the preset angle and there is no obstruction in the direction of the line of sight between the first satellite and the terminal. The terminal performs network searching at a sixth moment, a seventh moment, and an eighth moment in the second network search mode, where a third time interval between the seventh moment and the sixth moment is less than a fourth time interval between the eighth moment and the seventh moment, the sixth moment is earlier than the seventh moment, and the seventh moment is earlier than the eighth moment. In this way, when the signal quality of the satellite network is good (that is, the specified satellite exists), the terminal performs network searching at the current moment at a high network search frequency. A probability that the terminal finds a signal of the first satellite is high, so that a probability that the terminal quickly performs network searching successfully is higher. As time elapses, the terminal gradually decreases the network search frequency. Because the terminal does not find the signal of the first satellite at the high network search frequency, the terminal tends to consider that a network search success rate is low at this time, and may gradually decrease the network search frequency. In addition, the first satellite gradually moves away from the area above the terminal, a distance between the terminal and the first satellite increases, and the network search success rate of the terminal is lower. The terminal may reduce, by decreasing the network search frequency, power consumption caused by a network search attempt failure.

In a possible implementation, before receiving the first input for sending the uplink data to the satellite device, the method further includes:
disconnecting, by the terminal, from the satellite device. In this way, the terminal disconnects from the satellite device, and the terminal determines a network search mode based on whether the first satellite exists, and performs network searching in the determined network search mode. After network searching succeeds, the terminal performs an operation of sending the uplink data.

In a possible implementation, in response to the first input, performing network searching in the first network search mode if the included angle between the horizontal plane and the direction of the line of sight between any one of all the satellites of the satellite device and the terminal is less than the preset angle and/or there is an obstruction in the direction of the line of sight between the satellite and the terminal specifically includes: in response to the first input, performing network searching in the first network search mode if the included angle between the horizontal plane and the direction of the line of sight between any one of all the satellites of the satellite device and the terminal is less than the preset angle and/or there is an obstruction in the direction of the line of sight between the satellite and the terminal, and a first condition is met. The first condition includes: A battery level of the terminal is less than a preset battery level, and/or a visible range of the terminal is less than a preset range, and/or duration in which the first satellite moves to the visible range of the terminal is greater than preset duration. There is no obstruction in a direction of a line of sight between a satellite within the visible range of the terminal and the terminal, and there is an obstruction in a direction of a line of sight between a satellite outside the visible range of the terminal and the terminal.

In a possible implementation, the method further includes: in response to the first input, performing network searching in the third network search mode if the included angle between the horizontal plane and the direction of the line of sight between any one of all the satellites of the satellite device and the terminal is less than the preset angle and/or there is an obstruction in the direction of the line of sight between the satellite and the terminal, and a second condition is met. A change trend of a time interval for network searching in the third network search mode is different from a change trend of a time interval for network searching in the first network search mode. The second condition includes: The battery level of the terminal is greater than the preset battery level, and/or the visible range of the terminal is greater than the preset range, and/or the duration in which the first satellite moves to the visible range of the terminal is less than the preset duration. In this way, the battery level and the visible range of the terminal, and the moving duration of the first satellite all affect a network search mode determined by the terminal. A higher battery level of the terminal indicates that the terminal supports network searching at a higher frequency. A larger visible range of the terminal indicates a higher probability that the first satellite is close to the visible range and that a network search interval of the terminal does not need to be too large. Shorter moving duration of the first satellite indicates that the first satellite is closer to the terminal and that the terminal may perform network searching at a small network search interval.

In a possible implementation, the terminal performs network searching at a ninth moment, a tenth moment, and an eleventh moment in the third network search mode, a fifth time interval between the tenth moment and the ninth moment is greater than a sixth time interval between the eleventh moment and the tenth moment, the ninth moment is earlier than the tenth moment, the tenth moment is earlier than the eleventh moment; and the first time interval is greater than the fifth time interval. In this way, the first condition and the second condition cause the time intervals for the network search modes determined by the terminal to decrease at different rates.

In a possible implementation, the method further includes: in response to the first input, displaying first prompt information if the included angle between the horizontal plane and the direction of the line of sight between any one of all the satellites of the satellite device and the terminal is less than the preset angle and/or there is an obstruction in the direction of the line of sight between the satellite and the terminal, where the first prompt information indicates to a user that the uplink data fails to be sent. In this way, when the first satellite does not exist, the terminal displays the first prompt information, to indicate to the user that the uplink data fails to be sent.

In a possible implementation, the first prompt information further indicates the user to send the uplink data at the second moment. In this way, the terminal indicates the user to send the uplink data at the second moment, thereby avoiding a case in which the user misses an occasion of sending the uplink data.

In some examples, the terminal displays the first prompt information at the first moment and/or the second moment. In this way, reminding the user at the first moment can help the user understand that the uplink data can be sent at the second moment, and reminding the user at the second moment can prevent the user from forgetting to send the uplink data at the second moment.

In a possible implementation, the method further includes: obtaining position information of the terminal and position information of all the satellites of the satellite device; and determining directions of lines of sight between all the satellites of the satellite device and the terminal based on the position information of the terminal and the position information of all the satellites of the satellite device.

In a possible implementation, the method further includes: determining the visible range of the terminal based on the position information of the terminal and preset map information, where there is no obstruction in the direction of the line of sight between the satellite within the visible range of the terminal and the terminal, and there is an obstruction in the direction of the line of sight between the satellite outside the visible range of the terminal and the terminal; and determining, based on the position information of all the satellites of the satellite device and the visible range of the terminal, whether there are obstructions in the directions of the lines of sight between all the satellites of the satellite device and the terminal. In this way, the terminal may determine a surrounding obstruction status based on the preset map information, and finally determine obstruction information.

In a possible implementation, in response to the first input, sending the uplink data to the first satellite of the satellite device at the second moment if the included angle between the horizontal plane and the direction of the line of sight between any one of all the satellites of the satellite device and the terminal is less than the preset angle and/or there is an obstruction in the direction of the line of sight between the satellite and the terminal specifically includes: in response to the first input, determining that a satellite network service status of the terminal is normal, and sending the uplink data to the first satellite at the second moment if the included angle between the horizontal plane and the direction of the line of sight between any one of all the satellites of the satellite device and the terminal is less than the preset angle and/or there is an obstruction in the direction of the line of sight between the satellite and the terminal. In this way, the terminal performs an operation of sending the uplink data when a service of a satellite network is normal.

In a possible implementation, the method further includes: in response to the first input, displaying second prompt information if, within preset waiting duration, an included angle between the horizontal plane and a direction of a first line of sight between any one of all the satellites of the satellite device and the terminal is less than the preset angle and/or there is an obstruction in the direction of the line of sight between the satellite and the terminal, where the second prompt information indicates the user to send the uplink data after changing a position for sending the uplink data. In this way, when determining that the first satellite will not appear for a long time, the terminal indicates the user to change a position and then send the uplink data, thereby helping the user send the uplink data more quickly.

According to a second aspect, this application provides a communication method, applied to a satellite device. The method includes: receiving downlink data sent to a terminal; and sending a paging message to the terminal in a first paging mode if an included angle between a horizontal plane and a direction of a line of sight between any one of all satellites of the satellite device and the terminal is less than a preset angle and/or there is an obstruction in the direction of the line of sight between the satellite and the terminal, where the terminal performs paging at a first moment, a second moment, and a third moment in the first paging mode, a first time interval between the second moment and the first moment is greater than a second time interval between the third moment and the second moment, the first moment is earlier than the second moment, and the second moment is earlier than the third moment. In this way, when determining that the first satellite currently does not exist, the satellite device tends to consider that the satellites and the terminal are at positions at which transmission quality is poor. The satellite device may first send a paging message to the terminal at a large paging time interval, and then gradually decrease the paging time interval as time changes. Because the first satellite may appear above the terminal as time elapses, and the satellite device sends a paging message again, thereby increasing a paging success rate, and reducing power consumption caused by a failure of paging the terminal by the satellite device.

In a possible implementation, the method further includes: sending a paging message to the terminal in a second paging mode if included angles between the horizontal plane and directions of lines of sight of all the satellites of the satellite device is less than the preset angle and/or there are obstructions in the directions of the lines of sight, where the terminal performs paging at a fourth moment, a fifth moment, and a sixth moment in the second paging mode, a third time interval between the fifth moment and the fourth moment is less than a fourth time interval between the sixth moment and the fifth moment, the fourth moment is earlier than the fifth moment, and the fifth moment is earlier than the sixth moment. In this way, that the first satellite exists may indicate that the first satellite and the terminal are currently at positions at which transmission quality is good. The satellite device may first send the paging message to the terminal at a small paging time interval, to ensure that the downlink data can be sent to the terminal as soon as possible, and then gradually increase the paging time interval.

In a possible implementation, the method further includes: sending a first message to a calling device that sends the downlink data, where the first message indicates the calling device to prolong paging waiting duration. In this way, when the first satellite does not exist, the satellite device usually takes longer time to page the terminal. The satellite device may indicate the calling device to wait for a period of time, to avoid a case in which the calling terminal stops sending the downlink data before paging succeeds.

According to a third aspect, this application provides a communication method, applied to a terminal. The method includes: disconnecting, by the terminal, from a satellite device; and performing network searching in a first network search mode if an included angle between a horizontal plane and a direction of a line of sight between any one of all satellites of the satellite device and the terminal is less than a preset angle and/or there is an obstruction in the direction of the line of sight between the satellite and the terminal, where the terminal performs network searching at a first moment, a second moment, and a third moment in the first network search mode, a first time interval between the second moment and the first moment is greater than a second time interval between the third moment and the second moment, the first moment is earlier than the second moment, and the second moment is earlier than the third moment. In this way, after the terminal disconnects from a network, when determining that no specified satellite exists, the terminal performs network searching at the first moment at a low network searching frequency. A network search failure rate of the terminal is high when signal quality of a satellite network is poor. The terminal performs network searching at the first moment at a low network search frequency, thereby reducing power consumption caused by a network search failure of the terminal. As time elapses, a first satellite moves to an area above the terminal, and a probability that the terminal successfully performs network searching increases. The terminal gradually increases a network search frequency, thereby ensuring that the terminal successfully performs network searching.

In a possible implementation, network searching is performed in a second network search mode if an included angle between the horizontal plane and a direction of a line of sight between the first satellite and the terminal is greater than the preset angle and there is no obstruction in the direction of the line of sight between the first satellite and the terminal. The terminal performs network searching at a fourth moment, a fifth moment, and a sixth moment in the second network search mode, a third time interval between the fifth moment and the fourth moment is less than a fourth time interval between the sixth moment and the fifth moment, the fourth moment is earlier than the fifth moment, and the fifth moment is earlier than the sixth moment. In this way, after the terminal disconnects from the network, when determining that a specified satellite exists, the terminal performs network searching at the fourth moment at a high network searching frequency. When the signal quality of the satellite network is good, the terminal has a low network search failure rate, which helps the terminal quickly and successfully perform network searching.

In a possible implementation, in response to the first input, performing network searching in the first network search mode if the included angle between the horizontal plane and the direction of the line of sight between any one of all the satellites of the satellite device and the terminal is less than the preset angle and/or there is an obstruction in the direction of the line of sight between the satellite and the terminal specifically includes: performing network searching in the first network search mode if the included angle between the horizontal plane and the direction of the line of sight between any one of all the satellites of the satellite device and the terminal is less than the preset angle and/or there is an obstruction in the direction of the line of sight between the satellite and the terminal, and a first condition is met. The first condition includes: A battery level of the terminal is less than a preset battery level, and/or a visible range of the terminal is less than a preset range, and/or duration in which the first satellite moves to the visible range of the terminal is greater than preset duration. There is no obstruction in a direction of a line of sight between a satellite within the visible range of the terminal and the terminal, and there is an obstruction in a direction of a line of sight between a satellite outside the visible range of the terminal and the terminal.

In a possible implementation, the method further includes: performing network searching in a third network search mode if the included angle between the horizontal plane and the direction of the line of sight between any one of all the satellites of the satellite device and the terminal is less than the preset angle and/or there is an obstruction in the direction of the line of sight between the satellite and the terminal, and a second condition is met. A change trend of a time interval for network searching in the third network search mode is different from a change trend of a time interval for network searching in the first network search mode. The second condition includes: A battery level of the terminal is greater than a preset battery level, and/or a visible range of the terminal is greater than a preset range, and/or duration in which the first satellite moves to the visible range of the terminal is less than preset duration.

According to a fourth aspect, this application provides a terminal, including one or more processors, one or more memories, and one or more transceivers. The one or more transceivers and the one or more memories are coupled to the one or more processors. The one or more memories are configured to store a computer-executable program. When the one or more processors execute the computer-executable program, the terminal is caused to perform any possible implementation method according to the first aspect and/or the third aspect.

According to a fifth aspect, this application provides a computer-readable storage medium, storing a computer program. When the computer program is run on a processor of a terminal, the terminal is caused to perform any possible implementation method according to the first aspect and/or the third aspect.

According to a sixth aspect, this application provides a chip, used in a terminal, and including a processing circuit and an interface circuit. The interface circuit is configured to receive code instructions and transmit the code instructions to the processing circuit. The processing circuit is configured to run the code instructions to perform any possible implementation method according to the first aspect and/or the third aspect.

According to a seventh aspect, this application provides a computer program product. When the computer program product runs on a terminal, the terminal is caused to perform the method according to any possible implementation method according to the first aspect and/or the third aspect.

According to an eighth aspect, this application provides a satellite device, including one or more processors, one or more memories, and one or more transceivers. The one or more transceivers and the one or more memories are coupled to the one or more processors. The one or more memories are configured to store a computer-executable program. When the one or more processors execute the computer-executable program, the satellite device is caused to perform any possible implementation method according to the second aspect.

According to a ninth aspect, this application provides a computer-readable storage medium, storing a computer program. When the computer program is run on a processor of a satellite device, the satellite device is caused to perform any possible implementation method according to the second aspect.

According to a tenth aspect, this application provides a computer program product. When the computer program product runs on a satellite device, the satellite device is caused to perform any possible implementation method according to the second aspect.

### BRIEF DESCRIPTION OF DRAWINGS

FIG. 1 is a diagram of a communication system 10 according to an embodiment of this application;
FIG. 2 is a diagram of an elevation angle according to an embodiment of this application;
FIG. 3 is a diagram of a visible range according to an embodiment of this application;
FIG. 4 is a schematic flowchart of a communication method according to an embodiment of this application;
FIG. 5 is a schematic flowchart of obtaining obstruction information according to an embodiment of this application;
FIG. 6 is a diagram of paging occasions according to an embodiment of this application;
FIG. 7 is a schematic flowchart of another communication method according to an embodiment of this application;
FIG. 8 is a diagram of modules according to an embodiment of this application;
FIG. 9A to FIG. 9C are a schematic flowchart of another communication method according to an embodiment of this application;
FIG. 10A to FIG. 10F are diagrams of a group of interfaces according to an embodiment of this application;
FIG. 11 is a schematic flowchart of another communication method according to an embodiment of this application;
FIG. 12 is a diagram of a structure of a terminal 100 according to an embodiment of this application; and
FIG. 13 is a diagram of a structure of a communication apparatus 1300 according to an embodiment of this application.

### DESCRIPTION OF EMBODIMENTS

The technical solutions according to embodiments of this application are clearly and completely described in the following with reference to the accompanying drawings. In the descriptions of embodiments of this application, unless otherwise specified, "/" indicates "or". For example, A/B may indicate A or B. The term "and/or" in this specification merely describes an association relationship between associated objects, and indicates that three relationships may exist. For example, A and/or B may indicate the following three cases: Only A exists, both A and B exist, or only B exists. In addition, in the descriptions of embodiments of this application, "a plurality of" means two or more.

In the following descriptions, the terms "first" and "second" are merely intended for a purpose of description, and shall not be interpreted as an implication or implication of relative importance or implicit indication of a quantity of indicated technical features. Therefore, a feature limited by "first" and "second" may explicitly or implicitly include one or more features. In the descriptions of embodiments of this application, unless otherwise specified, "a plurality of" means two or more.

The following first describes a communication system 10 according to an embodiment of this application.

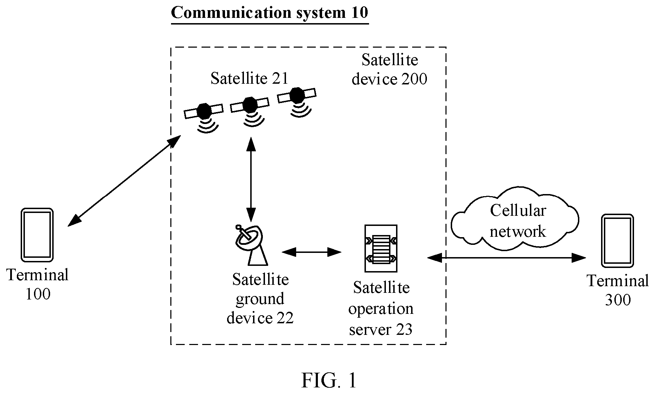

For example, as shown in FIG. 1, the communication system 10 may include but is not limited to a terminal 100, a satellite device 200, and the like. When the terminal 100 is in a non-terrestrial network, the terminal 100 may implement a non-terrestrial network communication function through the satellite device 200. The terminal 100 may send a satellite message to another terminal through the satellite device 200. The satellite device 200 may receive the satellite message sent by the terminal 100. If the another terminal is located in a terrestrial network (terrestrial network, TN), after receiving the satellite message sent by the terminal 100, the satellite device 200 may send the satellite message to the another terminal in the terrestrial network through a terrestrial network device. If the another terminal is located in a non-terrestrial network, after receiving the satellite message sent by the terminal 100, the satellite device 200 may deliver the satellite message to the another terminal in the non-terrestrial network. Similarly, the satellite device 200 may further receive a satellite message sent by the another terminal to the terminal 100, and send the satellite message to the terminal 100 in the non-terrestrial network. The non-terrestrial network includes a satellite network. The terrestrial network may include but is not limited to a cellular network, a wireless local area network, and the like.

The satellite device 200 may include but is not limited to a satellite 21, a satellite ground device 22, a satellite operation server 23, and the like. The satellite 21 may be configured to: relay and forward a satellite message, and the satellite 21 may forward, to the satellite ground device 22, a satellite message sent by a terminal (for example, the terminal 100) in the non-terrestrial network. The satellite 21 may further relay and forward, to the terminal in the non-terrestrial network, a satellite message sent by the satellite ground device 22. The satellite ground device 22 may include one or more devices that have a sending function and one or more devices that have a receiving function, or may include one or more devices that have a sending function and a receiving function. This is not limited herein. The satellite ground device 22 may further include one or more devices that have a data processing function of a satellite communication protocol stack, and may be configured to encapsulate or parse a satellite message based on the satellite protocol stack. The satellite operation server 23 may be configured to provide a satellite communication service for the terminal. The satellite operation server 23 may be configured to provide a system message including data such as a beam center position, a frequency, and a public land mobile network (public land mobile network, PLMN).

When the terminal 100 sends a satellite message to a terminal 300 in the terrestrial network, the terminal 100 may first send the satellite message to the satellite 21. The satellite 21 performs relay only, to forward, to the satellite ground device 22 on the ground, the satellite message sent by the terminal 100. The satellite ground device 22 may send the satellite message to the satellite operation server 23. The satellite operation server 23 may parse the satellite message from the terminal 100, and forward content in the satellite message to the terminal 300 through the terrestrial network. Similarly, when the terminal 300 in the terrestrial network sends a satellite message to the terminal 100 in the non-terrestrial network, the terminal 300 may first send the satellite message to the satellite operation server 23 through the terrestrial network. The satellite operation server 23 may store the satellite message from the terminal 300. After detecting that the terminal 100 accesses the non-terrestrial network, the satellite operation server 23 may send the satellite message to the terminal 100 in the non-terrestrial network through the satellite ground device 22 and the satellite 21.

In some examples, when the terminal 100 in the satellite network and the terminal 300 in the cellular network transmit data, the satellite network and the cellular network may transmit data through a public switched telephone network (public switched telephone network, PSTN).

The terminal 100 may alternatively send a satellite message to a terminal 400 (not shown in the figure) in the non-terrestrial network. The terminal 100 may forward, through the satellite 21 and the satellite ground device 22, the satellite message sent by the terminal 100 to the satellite operation server 23 on the ground. The satellite operation server 23 may store the satellite message from the terminal 100. After detecting that the terminal 400 accesses the non-terrestrial network, the satellite operation server 23 may send the satellite message from the terminal 100 to the terminal 400 in the non-terrestrial network through the satellite ground device 22 and the satellite 21. Similarly, the terminal 400 in the non-terrestrial network may alternatively send a satellite message to the terminal 100 in the non-terrestrial network.

In embodiments of this application, the satellite 21 may include but is not limited to a geostationary orbit (geostationary orbit, GEO) satellite, a medium earth orbit (medium earth orbit, MEO) satellite, a low earth orbit (low earth orbit, LEO) satellite, and the like. Because coverage areas of different satellites are different, the terminal 100 may implement the non-terrestrial network communication function through a target satellite in the satellites 21. It should be noted that, when a quantity of satellites of the satellite device 200 is greater than 1, the terminal 100 and the satellite device 200 may set, according to a preset satellite selection rule, a satellite that communicates with the terminal 100. For example, the terminal 100 may use any one of a plurality of satellites of the satellite device 200 as the target satellite, or use a satellite with a strongest received signal in the plurality of satellites as the target satellite, or use a satellite that is closest to the terminal 100 in the plurality of satellites as the target satellite, or use a satellite with a smallest traffic volume in the plurality of satellites as the target satellite. In some examples, the target satellite may be a satellite of the satellite device 200 within a preset observation range. The satellite of the satellite device 200 within the preset observation range may be a satellite of the satellite device 200 in a same hemisphere (or a same continent, or a same city, or the like) as the terminal 100 on the earth, and/or a satellite of the satellite device 200 within a preset radius (for example, 1 kilometer) centered on a position of the terminal 100, and/or a satellite of the satellite device 200 whose beam coverage includes the position of the terminal 100. Similarly, when a quantity of satellites of the satellite device 200 within the preset observation range of the terminal 100 is greater than 1, the terminal 100 and the satellite device 200 may set, according to the preset satellite selection rule, a satellite that communicates with the terminal 100. Both positions of the terminal 100 and the target satellite relative to each other and attitude of the terminal 100 affect quality of communication between the terminal 100 and the satellite device 200.

In a possible implementation, the terminal 100 may indicate a user to perform a satellite alignment operation, to align a radiation direction of an antenna of the terminal 100 with a direction in which the target satellite is located. The target satellite is in (located in) a direction of a line of sight (line of sight, LOS) path of the terminal 100, and a direction of the target satellite relative to the terminal 100 is the direction of the LOS path. The terminal 100 may obtain attitude information of the terminal 100 through a sensor (for example, a gyroscope). The terminal 100 may determine, based on the attitude information of the terminal 100 and a radiation direction of a main lobe of an antenna radiation pattern of the antenna (also referred to as the radiation direction of the antenna) of the terminal 100, prompt information indicating the user to align the radiation direction of the antenna of the terminal 100 with the direction of the LOS path. In this way, the terminal 100 may help, based on the prompt information, the user perform the satellite alignment operation, thereby improving communication quality of satellite communication.

A procedure in which the terminal 100 initiates communication to another terminal is referred to as a calling procedure, and a procedure in which the terminal 100 receives communication initiated by another terminal is referred to as a called procedure. In a scenario in which the terminal 100 is a calling party, the terminal 100 may guide, based on the prompt information, the user to perform the satellite alignment operation. In a scenario in which the terminal 100 is a called party, because the terminal 100 cannot predict time at which the terminal 100 is called by the another terminal, the terminal 100 cannot display the prompt information indicating the user to perform the satellite alignment operation, and communication quality is poor. Therefore, when the terminal 100 is in a called scenario, the terminal 100 cannot indicate the user to perform the satellite alignment operation to ensure quality of communication between the terminal 100 and the target satellite.

When the terminal 100 communicates with satellites (for example, LEO satellites) other than GEO satellites in the satellite device 200, because the satellites other than the GEO satellites move relative to the earth, beam coverage of these satellites keeps changing, and quality of communication between the terminal 100 and these satellites also changes with movement of the satellites. Therefore, when the terminal 100 communicates with these satellites, the user needs to be prompted to continuously perform the satellite alignment operation. The operation is complex. In addition, moving speeds of these satellites are uncertain. Some satellites move at high speeds. As a result, it is inconvenient for the user to perform satellite alignment, making it impossible to accurately point toward a satellite direction.

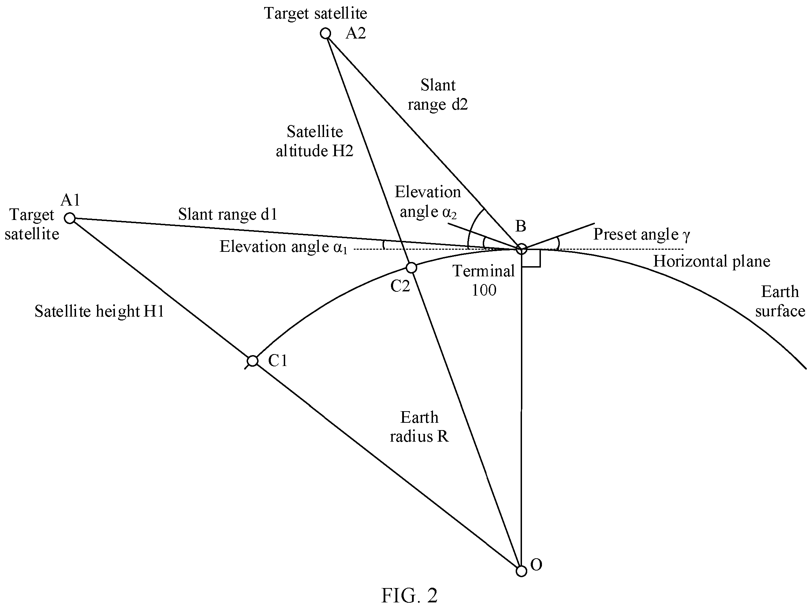

For example, as shown in FIG. 2, a point O is the center of the earth. The terminal 100 is located at a point B on the earth surface, and a distance between the point B and the point O is the earth radius R. When a satellite of the satellite device 200 is located at a point A1, a point C1 is an intersection point between the earth surface and a connection line between the point A1 and the point O. A vertical height of the satellite at the point A1 from the earth surface is a satellite height H1, a distance between the point C1 and the point O is the earth radius R, and a Euclidean distance between the satellite at the point A1 and the point B is a slant range d1. A direction of an LOS path 1 may be represented as a direction of the point A1 relative to the point B, the point A1 is located in the direction of the LOS path 1 of the point B, and the slant range d1 is in the direction of the LOS path 1. An acute angle between the slant range d1 and a horizontal plane is an elevation angle α1.

When a satellite of the satellite device 200 is located at a point A2, a point C2 is an intersection point between the earth surface and a connection line between the point A2 and the point O. A vertical height of the satellite at the point A2 from the earth surface is a satellite height H2, a distance between the point C2 and the point O is the earth radius R, and a Euclidean distance between the satellite at the point A2 and the point B is a slant range d2. A direction of an LOS path 2 may be represented as a direction of the point A2 relative to the point B, the point A2 is located in the direction of the LOS path 2 of the point B, and the slant range d2 is in the direction of the LOS path 2. An acute angle between the slant range d2 and the horizontal plane is an elevation angle α2.

The terminal 100 may obtain, through calculation by using Formula (1), an acute angle (namely, an elevation angle) between the horizontal plane and a slant range between the terminal 100 and the target satellite. $d = \sqrt{{R}^{2} {sin}^{2} α + {H}^{2} + 2 HR} - Rsinα$ Formula (1)

In Formula (1), α is the acute angle between the slant range and the horizontal plane, d is the slant range (namely, a line of sight) between the terminal 100 and the satellite, R is the earth radius, and H is a satellite height. The terminal 100 is preset with position information of the satellite, the satellite height H of the satellite, and the earth radius R. The terminal 100 may further obtain position information of the terminal 100. The terminal 100 may obtain the slant range d through calculation based on the position information of the terminal 100 and the position information of the satellite, and then obtain α based on the slant range d and the known parameters by using Formula (1). The satellite device 200 may obtain the position information of the satellite, the satellite height H of the satellite, and the earth radius R. The satellite device 200 may obtain the position information of the terminal 100, and obtain the slant range d through calculation based on the position information of the terminal 100 and the position information of the satellite. The satellite device 200 may obtain α based on the slant range d and the known parameters by using Formula (1).

It should be noted that, compared with a signal from a high-elevation angle satellite, a signal from a low-elevation angle satellite has a longer transmission path and more severe signal strength attenuation, and may also be easily obstructed by some objects (for example, high-rise buildings and high mountains) on the horizon during signal transmission. To ensure communication quality, a minimum elevation angle (also referred to as a preset angle) is set for the terminal 100. When the acute angle between the horizontal plane and the line of sight between the terminal 100 and the satellite is less than the preset angle, quality of communication between the terminal 100 and the satellite is poor, and in some cases, the terminal 100 cannot communicate with the satellite. In embodiments of this application, the acute angle between the horizontal plane and the line of sight between the terminal 100 and the satellite may be referred to as a line-of-sight elevation angle. For example, the preset angle of the terminal 100 is γ (for example, 10 degrees, 14 degrees, 28 degrees, or 33 degrees). The terminal 100 is located at the point B shown in FIG. 2. As shown in FIG. 2, when the satellite is located at the point A1, the line-of-sight elevation angle α1 obtained by the terminal 100 through calculation is less than the preset angle γ, and the terminal 100 cannot communicate with the satellite. When the satellite is located at the point A2, the line-of-sight elevation angle α2 obtained by the terminal 100 through calculation is greater than the preset angle γ, and the terminal 100 can communicate with the satellite. It should be further noted that, when the line-of-sight elevation angle of the satellite is less than the preset angle, even if the radiation direction of the antenna of the terminal 100 is aligned with the satellite, quality of communication between the terminal 100 and the satellite is poor.

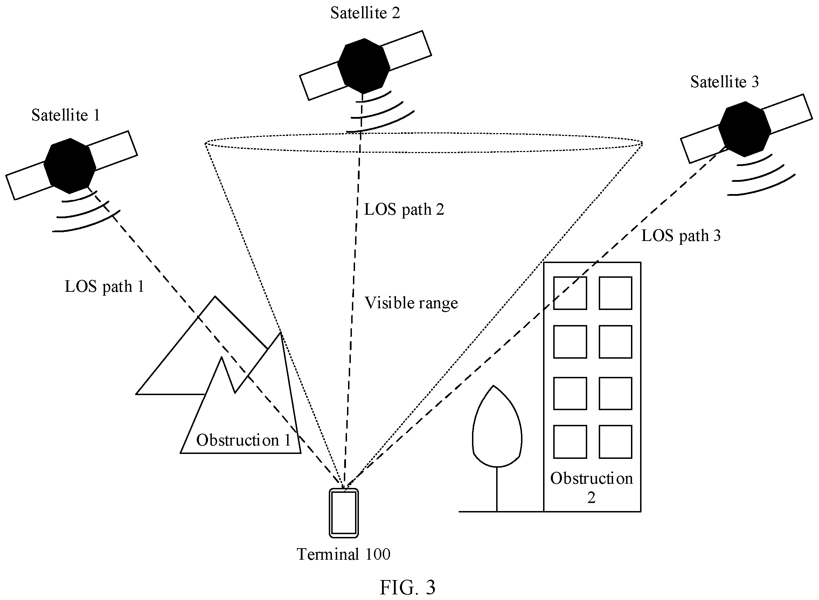

It should be further noted that when there is an obstruction (for example, a building or a mountain) in a line-of-sight direction of the satellite relative to the terminal 100, quality of communication between the terminal 100 and the satellite is poor. For example, as shown in FIG. 3, there are a plurality of satellites near the terminal 100, and the plurality of satellites include a satellite 1, a satellite 2, and a satellite 3. There are obstructions such as an obstruction 1 and an obstruction 2 shown in FIG. 3, near the position of the terminal 100, the obstruction 1 is on the LOS path 1 between the terminal 100 and the satellite 1, and the obstruction 2 is on an LOS path 3 between the terminal 100 and the satellite 3. Therefore, the terminal 100 cannot communicate with the satellite 1 and the satellite 3. There is no obstruction on the LOS path 2 between the terminal 100 and the satellite 2. Therefore, the terminal 100 may communicate with the satellite 2. When a visible range of the terminal 100 is represented by a cone shown in FIG. 3, the satellite 2 is within the visible range of the terminal 100, and the satellite 1 and the satellite 3 are outside the visible range of the terminal 100. It may be understood that, when there is an obstruction in the line-of-sight direction of the satellite relative to the terminal 100, even if the radiation direction of the antenna of the terminal 100 is aligned with the satellite, quality of communication between the terminal 100 and the satellite is poor.

In embodiments of this application, the line-of-sight direction of the satellite is a direction of a line of sight between the satellite and the terminal 100 (namely, the line-of-sight direction of the satellite relative to the terminal 100), and the line-of-sight elevation angle of the satellite is the acute angle between the horizontal plane and the direction of the line of sight between the satellite and the terminal 100. In satellites of the satellite device 200, a satellite is determined as a specified satellite if a line-of-sight elevation angle between the satellite and the terminal 100 is greater than the preset angle and there is no obstruction in a direction of the line of sight between the satellite and the terminal 100, that is, in the satellites of the satellite device 200, a satellite whose line-of-sight elevation angle is greater than the preset angle and whose line of sight is not obstructed in the line-of-sight direction is the specified satellite.

An embodiment of this application provides a communication method. The satellite device 200 receives downlink data sent to the terminal 100. The satellite device 200 obtains position information of the terminal 100 and position information of a satellite of the satellite device 200. The satellite device 200 determines, based on the position information of the terminal 100 and the position information of the satellite of the satellite device 200, a line-of-sight direction of the satellite of the satellite device 200 relative to the terminal 100. The satellite device 200 may obtain obstruction information of the terminal 100. The obstruction information may indicate whether there is an obstruction in the line-of-sight direction of the satellite of the satellite device 200 relative to the terminal 100.

When the satellite device 200 determines that a line-of-sight elevation angle between any one of all satellites of the satellite device 200 and the terminal 100 is less than a preset angle and/or there is an obstruction in a direction of the line of sight between the satellite and the terminal 100 (that is, line-of-sight elevation angles of all the satellites of the satellite device 200 are less than the preset angle and/or there are obstructions in the line-of-sight directions), the satellite device 200 determines that no specified satellite exists, and sends a paging message to the terminal 100 in a first paging mode. In the first paging mode, a time interval at which the satellite device 200 sends the paging message to the terminal 100 gradually decreases. The satellite device 200 sends the paging message to the terminal 100 at a moment 1, a moment 2, and a moment 3 in the first paging mode, and a time interval between the moment 2 and the moment 1 is greater than or equal to a time interval between the moment 3 and the moment 2. The satellite device 200 may send the paging message to the terminal 100 in the first paging mode through a target satellite in the satellites of the satellite device 200.

When the satellite device 200 determines that a line-of-sight elevation angle between at least one of the satellites of the satellite device 200 and the terminal 100 is greater than or equal to the preset angle and there is no obstruction in a direction of the line of sight between the at least one satellite and the terminal 100 (that is, a line-of-sight elevation angle of the at least one satellite of the satellite device 200 is greater than or equal to the preset angle and there is no obstruction in a line-of-sight direction of the at least one satellite), the satellite device 200 determines that a specified satellite exists, and sends a paging message to the terminal 100 in a second paging mode through the specified satellite. In the second paging mode, a time interval at which the satellite device 200 sends the paging message to the terminal 100 gradually increases. The satellite device 200 sends the paging message to the terminal 100 at a moment 4, a moment 5, and a moment 6 in the second paging mode, and a time interval between the moment 5 and the moment 4 is less than or equal to a time interval between the moment 5 and the moment 6.

In this way, when sending the downlink data to the terminal in a satellite network, the satellite device 200 may first determine a visible range of the terminal 100 based on map information near a position of the terminal 100. Then, the satellite device 200 determines, based on the position information of the terminal 100 and position information of the satellites of the satellite device 200, whether the specified satellite exists. When determining that the specified satellite exists, the satellite device 200 may send the paging message to the terminal 100 through the specified satellite. That the specified satellite exists may indicate that the specified satellite and the terminal 100 are currently at positions at which transmission quality is good. The satellite device 200 may first send the paging message to the terminal 100 at a small paging time interval, to ensure that the downlink data can be sent to the terminal 100 as soon as possible, and then gradually increase the paging time interval. In general, in the second paging mode, a paging frequency of the satellite device 200 decreases. When determining that no specified satellite currently exists, the satellite device 200 tends to consider that the satellites and the terminal 100 are at positions at which transmission quality is poor. The satellite device 200 may first send a paging message to the terminal 100 at a large paging time interval, and then gradually decrease the paging time interval as time changes. Because the specified satellite may appear above the terminal 100 as time elapses, and the satellite device 200 sends a paging message again, thereby increasing a paging success rate, and reducing power consumption caused by a failure of paging the terminal 100 by the satellite device 200. In general, in the first paging mode, the paging frequency of the satellite device 200 increases.

In some examples, the satellite device 200 may determine the obstruction information based on the position information of the terminal 100 and preset map information, where the obstruction information may indicate whether there is an obstruction in the line-of-sight direction. The preset map information may include altitude information of the earth surface. For example, the preset map information may include but is not limited to a navigation map, a digital terrain model (digital terrain model, DTM), and the like. In this way, the satellite device 200 may determine the visible range of the terminal 100 based on the position information of the terminal 100 and the preset map information. When a satellite is within the visible range of the terminal 100, there is no obstruction on a line of sight between the satellite and the terminal 100. When a satellite is outside the visible range of the terminal 100, there is an obstruction on a line of sight between the satellite and the terminal 100. The satellite device 200 may determine, based on the visible range of the terminal 100 and the position information of the satellite of the satellite device 200, whether the satellite of the satellite device 200 is within the visible range of the terminal 100, that is, whether there is an obstruction in the line-of-sight direction of the satellite.

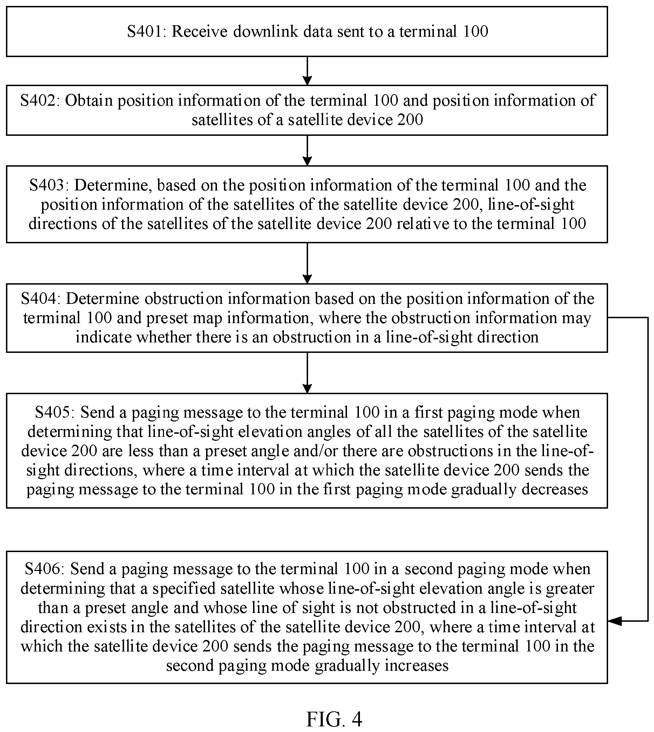

For example, as shown in FIG. 4, a communication method provided in an embodiment of this application may include the following steps.

S401: The satellite device 200 receives downlink data sent to the terminal 100.

The downlink data may include but is not limited to one or more of communication data sent by a calling terminal (for example, the terminal 300 or the terminal 400) to the terminal 100, service data sent by a server to the terminal 100, signaling sent to the terminal 100, and the like. The communication data sent by the calling terminal to the terminal 100 may be one or more of call data, SMS message data, position data, and the like. The service data sent by the server to the terminal 100 may be one or more of Internet access data, maritime data, weather data, and the like. For example, the call data sent by the calling terminal to the terminal 100 may be signaling used to make a call or make a voice call.

In some examples, the satellite device 200 may obtain the downlink data after receiving a service query request from the terminal 100. For example, the service query request may be a letter message download request for downloading the SMS message data sent to the terminal 100. For another example, the query request may be a download request for downloading the service data.

It should be noted that the satellite device 200 is not limited to sending a paging message to the terminal 100 when receiving the downlink data sent to the terminal 100. Alternatively, the satellite device 200 may send a paging message to the terminal 100 when updating a system message. Specifically, the satellite device 200 may broadcast an updated system message after updating the system message, and send the paging message to the terminal 100. It may be understood that, after receiving the paging message, the terminal 100 may receive the system message broadcast by the satellite device 200.

S402: The satellite device 200 obtains position information of the terminal 100 and position information of a satellite of the satellite device 200.

In some examples, when accessing the satellite device 200 for the first time, the terminal 100 may report the position information of the terminal 100 to the satellite device 200. Then, when the position information changes, the terminal 100 may perform a position update operation, and report updated position information to the satellite device 200. The terminal 100 may determine the position information of the terminal 100 through a navigation system, for example, a global navigation satellite system (global navigation satellite system, GNSS). The position information may include longitude, latitude, and a height of a position of the terminal 100. When a distance between a current position and a reported position is greater than a preset reporting distance (for example, 50 meters), the terminal 100 may send the updated position information to the satellite device 200. After receiving the position information reported by the terminal 100, the satellite device 200 may store most recently received position information of the terminal 100. In this way, the satellite device 200 may obtain the position information of the terminal 100, so that the satellite device 200 can provide a communication service for the terminal 100. Optionally, the terminal 100 may report the position information to the satellite device 200 every preset reporting duration (for example, 5 minutes).

After receiving the downlink data sent to the terminal 100, the satellite device 200 may obtain the stored position information of the terminal 100 and the stored position information of the satellite of the satellite device 200.

The satellite device 200 may obtain the position information of the satellite by using a navigation positioning technology like GNSS positioning. It should be noted that the position information of the satellite is not limited to being obtained through GNSS positioning. For example, the satellite device 200 may further obtain the position information of the satellite through the satellite ground device 22. This is not limited in embodiments of this application.

S403: The satellite device 200 determines, based on the position information of the terminal 100 and the position information of the satellite of the satellite device 200, a line-of-sight direction of the satellite of the satellite device 200 relative to the terminal 100.

After obtaining the position information of the terminal 100 and the position information of the satellite of the satellite device 200, the satellite device 200 may determine, based on the obtained information, the line-of-sight direction of the satellite of the satellite device 200 relative to the terminal 100.

S404: The satellite device 200 determines obstruction information based on the position information of the terminal 100 and preset map information, where the obstruction information may indicate whether there is an obstruction in the line-of-sight direction.

The satellite device 200 may determine, based on the position information of the terminal 100 and the preset map information, whether there is an obstruction in the line-of-sight direction of the satellite of the satellite device 200. In some examples, the satellite device 200 may determine a visible range of the terminal 100 based on the preset map information and the position information of the terminal 100. The satellite device 200 may determine the obstruction information based on the visible range of the terminal 100 and the position information of the satellite of the satellite device 200. The preset map information includes a navigation map and a DTM.

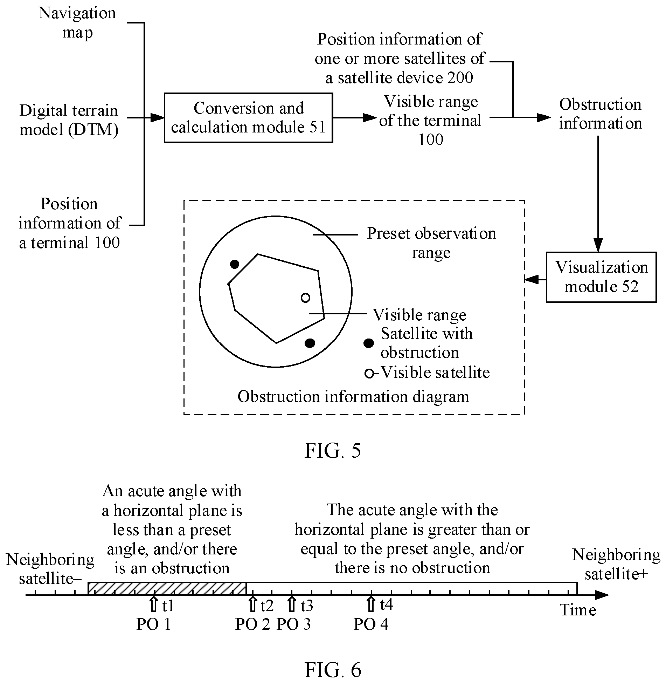

For example, as shown in FIG. 5, the satellite device 200 may determine the visible range of the terminal 100 based on the preset map information and the position information of the terminal 100 through a conversion and calculation module 51. Then, the satellite device 200 may determine the obstruction information based on the visible range of the terminal 100 and the position information of the satellite of the satellite device 200. When the satellite device 200 determines that a satellite is within the visible range of the terminal 100, the determined obstruction information may indicate that there is no obstruction in a line-of-sight direction of the satellite. When the satellite device 200 determines that a satellite is not within the visible range of the terminal 100, the determined obstruction information may indicate that there is an obstruction in a line-of-sight direction of the satellite.

Optionally, the satellite device 200 may further include a visualization module 52. The visualization module 52 may be configured to generate an obstruction information diagram based on the obstruction information. The obstruction information diagram may indicate a relative position relationship between one or more satellites of the satellite device 200 and the visible range of the terminal 100. For example, when the terminal 100 is at the position shown in FIG. 3, the terminal 100 may determine the obstruction information diagram shown in FIG. 5. A white dot may represent a satellite within the visible range of the terminal 100, and a black dot may represent an obstructed satellite outside the visible range.

In some examples, the satellite device 200 may determine, based on the preset map information and the position information of the terminal 100, a height of each obstruction on a projection of the line-of-sight direction on the earth surface. Then, the satellite device 200 may compare a height of a line of sight with the height of each obstruction, to determine whether there is an obstruction in the line-of-sight direction. When detecting that a height of any point on the line of sight is less than the height of the obstruction, the satellite device 200 determines that there is an obstruction in the line-of-sight direction. When detecting that heights of all points on the line of sight is greater than the height of the obstruction, the satellite device 200 determines that there is no obstruction in the line-of-sight direction.

In some other examples, the satellite device 200 may determine, as an obstruction elevation angle based on the preset map information and the position information of the terminal 100, an acute angle between a horizontal plane and a connection line between the terminal 100 and a highest point of each obstruction on the projection of the line-of-sight direction on the earth surface. When detecting that a line-of-sight elevation angle is less than any obstruction elevation angle, the satellite device 200 determines that there is an obstruction in the line-of-sight direction. When detecting that a line-of-sight elevation angle is greater than or equal to all obstruction elevation angles, the satellite device 200 determines that there is no obstruction in the line-of-sight direction.

In some other examples, the obstruction information may be information indicating the visible range of the terminal 100. The satellite device 200 may determine, based on the obstruction information and the position information of the satellite of the satellite device 200, whether there is an obstruction in the line-of-sight direction of the satellite.

In some other examples, the terminal 100 may determine the obstruction information based on the position information of the terminal 100 and the preset map information, and send the obstruction information to the satellite device 200. When sending the position information to the satellite device 200, the terminal 100 may send the obstruction information to the satellite device 200. Alternatively, the terminal 100 may send the obstruction information to the satellite device 200 when the obstruction information changes (for example, whether there is an obstruction in a line-of-sight direction of a satellite changes, or a coverage area of the visible range changes).

In some other examples, the terminal 100 may further determine the visible range of the terminal 100 through a GNSS, and then send the obstruction information including the visible range of the terminal 100 to the satellite device 200. The terminal 100 may receive positioning information sent by a GNSS satellite, and obtain the visible range of the terminal 100 through fitting based on a position of the GNSS satellite to which the received positioning information belongs. Optionally, the terminal 100 may determine, based on the visible range of the terminal 100 and the position information of the satellite of the satellite device 200 that is determined based on ephemeris information, the obstruction information indicating whether there is an obstruction in the line-of-sight direction, and send the obstruction information to the satellite device 200.

It should be noted that, in addition to the foregoing method for determining the obstruction information, the terminal 100 may determine the obstruction information by using another method. For example, the terminal 100 may further capture an image of an obstruction near the terminal 100 through a camera, and estimate, based on the collected image, a horizontal distance and a vertical height of the obstruction relative to the terminal 100. The terminal 100 may accordingly determine the obstruction information including the visible range of the terminal 100. This is not limited in embodiments of this application.

S405: Send a paging message to the terminal 100 in a first paging mode when determining that line-of-sight elevation angles of all satellites of the satellite device 200 are less than a preset angle and/or there are obstructions in line-of-sight directions, where a time interval at which the satellite device 200 sends the paging message to the terminal 100 in the first paging mode gradually decreases.

The satellite device 200 may send the paging message to the terminal 100 in the first paging mode when the satellite device 200 determines that there are obstructions in the line-of-sight directions of all the satellites and/or that the line-of-sight elevation angles of all the satellites are less than the preset angle. When the satellite device 200 is in the first paging mode, a time interval between paging moments of the satellite device 200 gradually decreases, and a call frequency of the satellite device 200 gradually increases. The satellite device 200 sends the paging message to the terminal 100 at a moment 1, a moment 2, and a moment 3 in the first paging mode, and a time interval between the moment 2 and the moment 1 is greater than or equal to a time interval between the moment 3 and the moment 2. The satellite device 200 may send the paging message to the terminal 100 in the first paging mode through a target satellite in the satellites of the satellite device 200.

The satellite device 200 may send the paging message to the terminal 100 through the target satellite in the satellites of the satellite device 200.

It should be noted that, in a process of decreasing the paging time interval, the satellite device 200 may keep a time interval unchanged within a specific time period. This is not limited in embodiments of this application.

It should be further noted that, in a process of paging the terminal 100, the satellite device 200 may perform some steps shown in FIG. 4 again every preset determining duration, to obtain the line-of-sight directions of the satellites of the satellite device 200 and the obstruction information. The satellite device 200 may accordingly determine whether a specified satellite whose line of sight is not obstructed in a line-of-sight direction and whose line-of-sight elevation angle is greater than or equal to the preset angle appears at a current moment. The satellite device 200 may perform step S406 when determining that the specified satellite exists.

In some examples, when the downlink data includes the call data sent by the calling terminal, the satellite device 200 may further notify, when determining that there are obstructions in the line-of-sight directions of all the satellites and/or that the line-of-sight elevation angles of all the satellites are less than the preset angle, the calling terminal to prolong paging waiting duration. After receiving the notification sent by the satellite device 200 to indicate the calling terminal to prolong the paging waiting duration, the calling terminal may prolong the paging waiting duration. In this way, because current communication quality of a called terminal is poor, the satellite device 200 notifies the calling terminal to prolong the paging waiting duration, thereby improving a call completion rate. Optionally, after receiving the notification, the calling terminal may further display prompt information indicating the user to wait for a period of time. The prompt information may include but is not limited to text prompt information, voice prompt information, image prompt information, and the like. For example, the prompt information may include text prompt information: "The user you are calling has poor communication quality. Please wait for a while". In this way, because the calling terminal needs to spend longer time to call the called terminal with poor communication quality in a satellite network, the user is prompted to wait patiently for calling, thereby increasing a call success rate.

In some other examples, the downlink data includes the call data sent by the calling terminal. When determining that there are obstructions in all the line-of-sight directions and/or that the line-of-sight elevation angles are less than the preset angle, the satellite device 200 may predict, based on the position information of the terminal 100 and the ephemeris information, a specified moment at which the specified satellite appears. When a time difference between the specified moment and the current moment is less than or equal to the preset waiting duration, the satellite device 200 may perform step S405 and notify the calling terminal to prolong the paging waiting duration. For details, refer to the foregoing embodiments. Details are not described herein again.

When the time difference between the specified moment and the current moment is greater than the preset waiting duration, the satellite device 200 may notify the calling terminal to cancel paging. After receiving a notification message indicating to cancel paging, the calling terminal cancels calling the called terminal. Optionally, the calling terminal may further display prompt information indicating the user to stop calling. For example, the prompt information may include text prompt information: "The party you are calling has poor signal quality. Please dial again later".

For example, the satellite device 200 may determine position information of the satellites at one or more subsequent moments based on the position information of the terminal 100. The satellite device 200 may determine line-of-sight directions and obstruction information of the satellites at the one or more moments based on the position information of the satellites at the one or more moments and the position information of the terminal 100. The satellite device 200 determines, based on the line-of-sight directions and the obstruction information of the satellites at the one or more moments, whether the specified satellite exists in the satellites of the satellite device 200 at the one or more moments. When determining that the specified satellite exists in the satellites of the satellite device 200 at the one or more moments, the satellite device 200 may use a moment at which the specified satellite first appears as the specified moment.

In some other examples, when determining that there are obstructions in all the line-of-sight directions and/or that the line-of-sight elevation angles are less than the preset angle, the satellite device 200 may predict, based on the position information of the terminal 100 and the ephemeris information, the specified moment at which the specified satellite for the terminal 100 appears. The satellite device 200 may send the paging message to the terminal 100 at the specified moment or after the specified moment. In this way, the satellite device 200 may first determine whether the terminal 100 is currently suitable for receiving the downlink data. When determining that no specified satellite exists, the satellite device 200 may consider that the terminal 100 is not suitable for receiving the downlink data. When determining that the specified satellite exists, the satellite device 200 may consider that the terminal 100 is suitable for receiving the downlink data. The satellite device 200 may send the paging message to the terminal 100 at a moment at which the terminal 100 is suitable for receiving the downlink data, thereby saving air interface resources of the satellite device 200 and increasing a transmission success rate.

Optionally, the satellite device 200 may send the paging message to the terminal 100 after receiving the downlink data sent to the terminal 100. The satellite device 200 may perform step S402 to step S404 after failing to send the paging message to the terminal 100. When determining that there are obstructions in all the line-of-sight directions and/or that the line-of-sight elevation angles are less than the preset angle, the satellite device 200 sends the paging message to the terminal 100 in the first paging mode, or sends the paging message to the terminal 100 at the specified moment or after the specified moment.

Optionally, the satellite device 200 may send the paging message to the terminal 100 in a second paging mode at the specified moment or after the specified moment.

S406: Send a paging message to the terminal 100 in a second paging mode when determining that the specified satellite whose line-of-sight elevation angle is greater than the preset angle and whose line of sight is not obstructed in the line-of-sight direction exists in the satellites of the satellite device 200, where a time interval at which the satellite device 200 sends the paging message to the terminal 100 in the second paging mode gradually increases.

The satellite device 200 may send the paging message to the terminal 100 in the second paging mode when the satellite device 200 determines that there is no obstruction in the line-of-sight direction of the specified satellite in the satellites of the satellite device 200 and that the line-of-sight elevation angle of the specified satellite is greater than or equal to the preset angle. When the satellite device 200 is in the second paging mode, a time interval between two adjacent paging moments of the satellite device 200 gradually increases, and a call frequency of the satellite device 200 gradually decreases. The satellite device 200 sends the paging message to the terminal 100 at a moment 4, a moment 5, and a moment 6 in the second paging mode, and a time interval between the moment 5 and the moment 4 is less than or equal to a time interval between the moment 5 and the moment 6. In some examples, the satellite device 200 may send the paging message to the terminal 100 through the specified satellite.

It should be noted that, when a quantity of specified satellites is greater than 1, the satellite device 200 may determine a target satellite in the plurality of specified satellites according to a preset satellite selection rule. The satellite device 200 may send the paging message to the terminal 100 through the target satellite.

It should be further noted that, in a process of increasing the calling time interval, the satellite device 200 may keep a calling time interval unchanged within a specific time period. This is not limited in embodiments of this application.

In some examples, in a process of paging the terminal 100, the satellite device 200 may perform step S402 to step S404 shown in FIG. 4 again every preset determining duration, to obtain the line-of-sight directions of the satellites of the satellite device 200 and the obstruction information. When determining that there are obstructions in the line-of-sight directions of all the satellites and/or that the line-of-sight elevation angles of all the satellites are less than the preset angle, the terminal 100 may perform step S405. For details, refer to the descriptions of step S405. Details are not described herein again.

For example, as shown in FIG. 6, at all moments in a stripe area, the line-of-sight elevation angles of all the satellites of the satellite device 200 relative to the terminal 100 are less than the preset angle and/or there are obstructions in the line-of-sight directions of all the satellites. At all moments in a blank area, the line-of-sight elevation angle of the specified satellite in the satellites of the satellite device 200 relative to the terminal 100 is greater than or equal to the preset angle and there is no obstruction in the line-of-sight direction of the specified satellite. If the satellite device 200 receives, before a moment t1 in the stripe area, the downlink data sent to the terminal 100, the satellite device 200 may send the paging message to the terminal 100 in the first paging mode. For example, the satellite device 200 may send the paging message to the terminal 100 at a paging occasion (paging occasion, PO) 1, a PO 2, and a PO 3. A time interval between the PO 2 and the PO 1 is greater than a time interval between the PO 3 and the PO 2. If the satellite device 200 receives, before a moment t2 in the blank area, the downlink data sent to the terminal 100, the satellite device 200 may send the paging message to the terminal 100 in the second paging mode. For example, the satellite device 200 may send the paging message to the terminal 100 at the PO 2, the PO 3, and a PO 4. The time interval between the PO 3 and the PO 2 is less than a time interval between the PO 4 and the PO 3. It should be noted that the paging occasions shown in FIG. 6 are merely an example, and should not constitute a specific limitation on a quantity of paging times and a paging frequency of the satellite device 200.

It may be understood that, when receiving the downlink data sent to the terminal 100, the satellite device 200 may send the paging message to the terminal 100 by performing the steps shown in FIG. 4. After receiving the paging message, the terminal 100 may send a paging acknowledgment message to the satellite device 200. After receiving the paging acknowledgment message, the satellite device 200 may send the downlink data to the terminal 100. After receiving the downlink data, the terminal 100 may perform an operation corresponding to the downlink data. For example, if the downlink data includes the SMS message data sent by the calling terminal, the terminal 100 may display the SMS message data.

In some examples, the satellite device 200 may obtain a line-of-sight direction of a satellite within a preset observation range and obstruction information, and determine whether there is an obstruction in the line-of-sight direction of the satellite within the preset observation range and whether a line of sight included angle of the satellite is greater than the preset angle. The satellite device 200 may accordingly determine a to-be-used paging mode. For details, refer to the foregoing embodiments. In this way, because a satellite outside the preset observation range is far away from the terminal 100, the satellite device 200 determines only whether a specified satellite exists in satellites within the preset observation range, thereby increasing a paging success rate and reducing calculation overheads.

In some examples, a plurality of first paging modes are set for the satellite device 200. When determining that no specified satellite exists, the satellite device 200 may predict that the specified satellite appears at the specified moment. In a subsequent embodiment, the predicted specified satellite may be referred to as a predicted specified satellite. The satellite device 200 may determine a to-be-used first paging mode based on the visible range of the terminal 100 and a moving trajectory of the predicted specified satellite. Change trends of the time intervals at which the satellite device 200 sends a paging message are different in different first paging modes. For example, maximum paging time intervals are different in different first paging modes, where the maximum paging time interval is a time interval with a maximum value between two adjacent paging operations in the first paging mode, and is also referred to as a maximum paging interval. Herein, the maximum paging interval of the first paging mode may be understood as a time interval between a first paging operation and a second paging operation. For another example, change trends of the time intervals are different in different first paging modes. For example, in a first paging mode, the time interval keeps unchanged and then decreases, and in a first paging mode, the time interval decreases and then keeps unchanged. For another example, in different first paging modes, time interval decrease amplitudes are different, namely, change trends of a time interval difference are different. For example, the plurality of first paging modes of the satellite device 200 may include but are not limited to a first paging mode in which the time interval difference keeps unchanged and then decreases, a first paging mode in which the time interval difference increases and then decreases, a first paging mode in which the time interval difference increases, then keeps unchanged, and then decreases, a first paging mode in which the time interval difference decreases, and a first paging mode in which the time interval difference decreases and then keeps unchanged. In this way, the satellite device 200 may select more appropriate first paging modes based on different application scenarios.

Specifically, the satellite device 200 may select a first paging mode based on the moving trajectory of the predicted specified satellite and the visible range of the terminal 100. The satellite device 200 may determine, based on the moving trajectory of the predicted specified satellite, a moving speed of the predicted specified satellite, and the visible range of the terminal 100, moving duration for the predicted specified satellite to enter the visible range of the terminal 100. When moving duration is less than preset moving duration, the satellite device 200 may use a first paging mode with a small maximum paging interval. When moving duration is greater than preset moving duration, the satellite device 200 may use a first paging mode with a large maximum paging interval. For example, a maximum paging interval of the first paging mode with a small maximum paging interval is less than a preset paging interval (for example, 60s). For example, a maximum paging interval of the first paging mode with a large maximum paging interval is greater than a preset paging interval (for example, 60s). In this way, longer moving duration of the predicted specified satellite indicates a longer distance from the visible range of the terminal 100. In this case, a first paging mode with a smaller paging interval is to be used. Shorter moving duration of the predicted specified satellite indicates a shorter distance from the visible range of the terminal 100. In this case, a first paging mode with a larger paging interval is to be used.

In some examples, when the moving duration is less than the preset moving duration, the satellite device 200 may use a first paging mode in which a maximum paging interval is small and a time interval difference keeps unchanged and then decreases. When the moving duration is greater than the preset moving duration, the satellite device 200 may use a first paging mode in which a maximum paging interval is large and a time interval differences decreases. In this way, when the predicted specified satellite is far away from the terminal 100, the satellite device 200 may first page the terminal 100 at a large time interval, and decrease the paging time interval as the predicted specified satellite approaches the terminal 100. When the predicted specified satellite is close to the terminal 100, the satellite device 200 may first page the terminal 100 at a small time interval. The satellite device 200 may first keep the small time interval unchanged, and then decrease the paging time interval.

In some examples, when the visible range of the terminal 100 is less than a preset range, the satellite device 200 may use a first paging mode with a large maximum paging interval. When the visible range of the terminal 100 is greater than a preset range, the satellite device 200 may use the first paging mode with a small maximum paging interval. In this way, when the visible range of the terminal 100 is small, there is a high probability that the predicted specified satellite is far away from a boundary of the visible range, and there is a high probability that the satellite device 200 has a low paging success rate at the current moment. After long time, when the predicted specified satellite moves near the visible range, a paging frequency may be increased. Therefore, using a first paging mode with a large maximum paging interval can ensure a paging success rate and reduce consumption of air interface resources of the satellite device 200. When the visible range of the terminal 100 is large, there is a high probability that the predicted specified satellite is close to a boundary of the visible range, and after short time, the predicted specified satellite may move to a position near the visible range. Therefore, a first paging mode with a small maximum paging interval is used, and the paging message is sent at a high paging frequency when the predicted specified satellite is near the visible range, thereby increasing a paging success rate.

In some examples, a plurality of preset moving duration may be set for the satellite device 200. The satellite device 200 may select a first paging mode based on a value relationship between moving duration and the plurality of preset moving duration. Shorter predicted moving duration of the specified satellite indicates a small maximum paging interval. Longer predicted moving duration of the specified satellite indicates a large maximum paging interval. In this way, the satellite device 200 can reduce power consumption of sending the paging message while increasing the paging success rate.

In some examples, when a plurality of second paging modes are set for the satellite device 200, the satellite device 200 may determine, when determining that the specified satellite exists, a to-be-used second paging mode based on the visible range of the terminal 100 and a moving trajectory of the specified satellite of the satellite device 200. Change trends of the time intervals at which the satellite device 200 sends a paging message are different in different second paging modes. For example, maximum paging time intervals are different in different second paging modes. For another example, change trends of the time intervals are different in different second paging modes. For example, in a second paging mode, the time interval keeps unchanged and then increases, and in a second paging mode, the time interval first increases and then keeps unchanged. For another example, in different second paging modes, time interval increase amplitudes are different, namely, change trends of a time interval difference are different. For example, the plurality of second paging modes of the satellite device 200 may include but are not limited to a second paging mode in which the time interval difference keeps unchanged and then increases, a second paging mode in which the time interval difference first increases and then decreases, a second paging mode in which the time interval difference first increases, then keeps unchanged, and then increases, a second paging mode in which the time interval difference increases, and a second paging mode in which the time interval difference first increases and then keeps unchanged. In this way, the satellite device 200 may select more appropriate second paging modes based on different application scenarios.

Specifically, the satellite device 200 may determine stay duration of the specified satellite within the visible range based on a moving trajectory of the specified satellite and the visible range of the terminal 100. When the stay duration is less than preset stay duration, the satellite device 200 may use a second paging mode with a small maximum paging interval. When the stay duration is greater than preset stay duration, the satellite device 200 may use a second paging mode with a large maximum paging interval.

In some examples, the satellite device 200 may determine a to-be-used second paging mode based on the visible range of the terminal 100. When the visible range of the terminal 100 is less than the preset range, the satellite device 200 may use the second paging mode with a small maximum paging interval. When the visible range of the terminal 100 is greater than the preset range, the satellite device 200 may use the second paging mode with a large maximum paging interval. In this way, because the visible range of the terminal 100 is small, the specified satellite leaves the visible range quickly, and the paging message needs to be sent to the specified satellite at a higher paging frequency. When the visible range of the terminal 100 is large, the specified satellite leaves the visible range slowly, and the paging message may be sent to the specified satellite at a lower paging frequency, thereby reducing power consumption of the satellite device 200.

Similarly, a plurality of preset stay duration may be set for the satellite device 200. The satellite device 200 may select a second paging mode based on a value relationship between stay duration and the plurality of preset stay duration.

In this way, by performing the steps shown in FIG. 4, the satellite device 200 may increase a success rate of receiving the downlink data by the terminal 100, and help the user successfully receive a called message.

In some examples, N-1 time intervals between first paging and N^{th} paging in a paging mode belong to a paging time interval range 1. M-N time intervals between the N^{th} paging and M^{th} paging in the paging mode belong to a paging time interval range 2, and so on. N is greater than or equal to 1, and M is greater than N. When the specified satellite exists, the satellite device 200 may determine, based on the visible range of the terminal 100 and/or the moving trajectory of the specified satellite, values of N and M and a corresponding paging interval range, that is, determine a to-be-used paging mode. When no specified satellite exists, the satellite device 200 may determine values of N and M and a corresponding paging interval range based on the visible range of the terminal 100 and/or the moving trajectory of the predicted specified satellite.

For example, when the satellite device 200 determines that no specified satellite exists, if the satellite device 200 determines that the moving duration of the predicted specified satellite is long, the satellite device 200 may use a first paging mode in which the value of N is small and a time interval in the paging time interval range 1 is large and/or the value of M is large and a time interval in the paging time interval range 2 is small. For example, the paging time interval range 1 may be [60 seconds, 200 seconds], and the paging time interval range 2 may be [3 seconds, 30 seconds]. In this way, when the predicted specified satellite is far away from the visible range, the satellite device 200 may perform paging at a low paging frequency. When the predicted specified satellite is close to the visible range, paging is performed at a high paging frequency. Similarly, if the satellite device 200 determines that the moving duration of the predicted specified satellite is short, the satellite device 200 may use a first paging mode in which the time interval in the paging time interval range 1 is small and/or the time interval in the paging time interval range 2 is small.

For example, when the satellite device 200 determines that the specified satellite exists, if the satellite device 200 determines that the stay duration of the specified satellite is long, the satellite device 200 may use a second paging mode in which the value of N is small and the time interval in the paging time interval range 2 is large. In this way, when the specified satellite stays for a long time, the satellite device 200 may perform paging at a low paging frequency. Similarly, if the satellite device 200 determines that the stay duration of the specified satellite is short, the satellite device 200 may use a second paging mode in which the time interval in the paging time interval range 1 is small and/or the time interval in the paging time interval range 2 is small.

It should be noted that the parameters that affect the paging time interval range, the value of N, and the value of M herein are merely examples. The satellite device 200 may alternatively determine the paging time interval range, the value of N, and the value of M based on the visible range of the terminal 100. Specifically, refer to the foregoing embodiments of selecting different first paging modes and second paging modes. Details are not described herein again.

In some examples, the satellite device 200 may further select different paging modes based on the visible range of the terminal 100 and the moving trajectory of the specified satellite. When determining that no specified satellite exists at the current moment, the satellite device 200 may predict the specified moment at which the specified satellite exists. The satellite device 200 may perform a paging operation in the second paging mode at a moment that is preset paging duration 1 away from the specified moment, and/or when determining that the specified satellite exists at the current moment, the satellite device 200 may predict a leaving moment at which the specified satellite leaves the visible range of the satellite device 200. The satellite device 200 may perform a paging operation in the first paging mode at a moment that is preset paging duration 2 away from the leaving moment. In this way, when the predicted specified satellite is about to enter or the existing specified satellite is about to leave the visible range of the terminal 100, the satellite device 200 may send the paging message to the terminal 100 at a high paging frequency, thereby increasing a paging success rate.

In a possible implementation, the satellite device 200 may adjust a paging time interval based on the visible range of the terminal 100 and the moving trajectory of the specified satellite. For example, the satellite device 200 determines that no specified satellite exists at the current moment. The satellite device 200 determines, through prediction, that the specified satellite appears in the visible range of the terminal 100 at the specified moment. The satellite device 200 may determine the paging time interval based on a moving trajectory of the predicted specified satellite from the current moment and the visible range.

For example, the satellite device 200 may send the paging message to the terminal 100 at the current moment at a time interval 1. The satellite device 200 may gradually decrease the time interval in a process in which the predicted specified satellite moves to the visible range, until the predicted specified satellite enters the visible range of the terminal 100.

The satellite device 200 may gradually increase the time interval after the specified satellite enters the visible range of the terminal 100. In this way, after the specified satellite moves to the visible range, and after the satellite device 200 fails to send the paging message a plurality of times through the specified satellite, the satellite device 200 tends to consider that a paging failure rate for the specified satellite is high, and continues to send the paging message at a specific time interval.

The satellite device 200 may gradually decrease the paging time interval when a time difference between the current moment and the leaving moment at which the specified satellite leaves the visible range of the terminal 100 is less than the preset paging duration 2. In this way, when detecting that the specified satellite is about to leave the visible range of the terminal 100, the satellite device 200 may increase the paging frequency, to strive to successfully send the paging message to the terminal 100 before the specified satellite leaves the visible range.

It may be understood that, after the specified satellite leaves the visible range of the terminal 100, the satellite device 200 may detect whether another specified satellite exists in the visible range of the terminal 100, and adjust the paging time interval according to the foregoing embodiments.

In this way, the satellite device 200 may adjust the paging time interval based on the relative position relationship between the satellites and the visible range of the terminal 100, thereby increasing a paging success rate while reducing power consumption of the terminal 100.

In a possible implementation, when receiving an input for sending uplink data, the terminal 100 may obtain the position information of the terminal 100 and position information of the satellites of the satellite device 200. The terminal 100 may determine, based on the position information of the terminal 100 and the position information of the satellites of the satellite device 200, the line-of-sight directions of the satellites of the satellite device 200 relative to the terminal 100. The terminal 100 may further determine the obstruction information, where the obstruction information may indicate whether there is an obstruction in the line-of-sight direction.

When determining that the line-of-sight elevation angles of all the satellites of the satellite device 200 are less than the preset angle and/or there are obstructions in the line-of-sight directions of all the satellites, that is, when no specified satellite whose line-of-sight elevation angle is greater than or equal to the preset angle and whose line of sight is not obstructed in a line-of-sight direction exists in the satellites of the satellite device 200, the terminal 100 predicts, based on the position information of the terminal 100 and the ephemeris information, that the specified satellite whose line-of-sight elevation angle is greater than or equal to the preset angle and whose line of sight is not obstructed in the line-of-sight direction exists at the specified moment closest to the current moment. The terminal 100 sends the uplink data to the specified satellite at the specified moment or after the specified moment.

The terminal 100 sends the uplink data to the specified satellite when determining that the specified satellite whose line-of-sight elevation angle is greater than or equal to the preset angle and whose line of sight is not obstructed in the line-of-sight direction exists in the satellites of the satellite device 200.

In this way, when actively sending the uplink data, the terminal 100 may first determine whether the terminal 100 is currently suitable for sending the uplink data. When determining that no specified satellite exists, the terminal 100 may consider that the terminal 100 is not suitable for sending the uplink data. When determining that the specified satellite exists, the terminal 100 may consider that the terminal 100 is suitable for sending the uplink data. The terminal 100 may send the uplink data to the satellite device 200 at a moment at which the terminal 100 is suitable for sending the uplink data, thereby reducing power consumption of the terminal 100 and saving air interface resources of the satellite device 200, and increasing a transmission success rate.

In some examples, after receiving the input for sending uplink data, the terminal 100 may further determine whether a satellite network service status of the terminal 100 is normal. When determining that the satellite network service status of the terminal 100 is normal, the terminal 100 may perform the step of determining whether the specified satellite exists. When determining that the satellite network service status of the terminal 100 is abnormal, the terminal 100 may display prompt information indicating to the user that the satellite network is currently abnormal. The terminal 100 may determine, by querying for whether a modem (modem) is connected to the satellite device 200, whether the satellite network service status is normal. When finding, through querying, that the modem disconnects from the network, the terminal 100 determines that the satellite network service status is currently abnormal. When finding, through querying, that the modem is connected to the network, the terminal 100 determines that the satellite network service status is currently normal. For example, when an airplane mode is enabled on the terminal 100, the satellite network service status of the terminal 100 is abnormal. In this way, the terminal 100 may first query for the satellite network service status of the terminal 100, and when the satellite network service status is normal, perform the procedure of sending the uplink data, or when the satellite network service status is abnormal, skip performing the procedure of sending the uplink data.

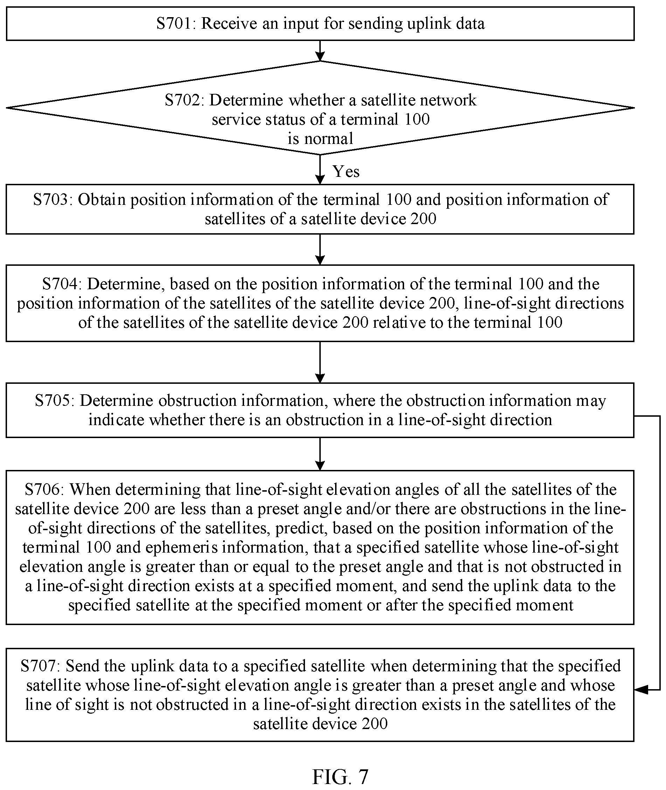

For example, as shown in FIG. 7, a communication method provided in an embodiment of this application may include the following steps.

S701: The terminal 100 receives an input for sending uplink data.

The uplink data may include but is not limited to one or more of communication data sent to a called terminal (for example, the terminal 300 or the terminal 400), service data sent to a server, communication signaling sent to the satellite device 200, and the like. The communication data sent by the terminal 100 to the called terminal may be one or more of call data, SMS message data, position data, and the like. The service data sent by the terminal 100 to the server may be one or more of Internet access data, service request data, and the like.

S702: The terminal 100 determines whether a satellite network service status of the terminal 100 is normal.

After receiving the input for sending uplink data, the terminal 100 may determine, in response to the input, whether the satellite network service status of the terminal 100 is normal. The terminal 100 may perform step S703 when determining that the satellite network service status of the terminal 100 is normal. When determining that the satellite network service status of the terminal 100 is abnormal, the terminal 100 may display prompt information indicating to a user that the satellite network is currently abnormal. When the terminal 100 receives a downlink signal sent by the satellite device 200, the terminal 100 may determine, based on the downlink signal, that the satellite network service status is normal. However, that the satellite network service status of the terminal 100 is normal can only indicate that the terminal 100 can receive the downlink signal, but cannot indicate that the terminal 100 can successfully send the uplink data. Therefore, the terminal 100 may perform step S703 and subsequent steps, to increase a success rate of sending the uplink data by the terminal 100.

S703: The terminal 100 obtains position information of the terminal 100 and position information of satellites of the satellite device 200.

The terminal 100 may obtain the position information of the terminal 100 through a navigation system. The terminal 100 may determine, based on the position of the terminal 100 and ephemeris information, position information of the satellites of the satellite device 200 at a current moment.

S704: The terminal 100 determines, based on the position information of the terminal 100 and the position information of the satellites of the satellite device 200, line-of-sight directions of the satellites of the satellite device 200 relative to the terminal 100.

S705: The terminal 100 determines obstruction information, where the obstruction information may indicate whether there is an obstruction in a line-of-sight direction.

For descriptions of step S704 and step S705, refer to the embodiment shown in FIG. 4. Details are not described herein again.

S706: When determining that line-of-sight elevation angles of all the satellites of the satellite device 200 are less than a preset angle and/or there are obstructions in line-of-sight directions of the satellites, predict, based on the position information of the terminal 100 and the ephemeris information, that a specified satellite whose line-of-sight elevation angle is greater than or equal to the preset angle and whose line of sight is not obstructed in a line-of-sight direction exists at a specified moment, and send the uplink data to the specified satellite at the specified moment or after the specified moment.

When determining that a line-of-sight elevation angle of each of all the satellites is less than the preset angle and/or there is an obstruction in a line-of-sight direction of the satellite, the terminal 100 may predict, based on the position information of the terminal 100 and the ephemeris information, the specified satellite that exists at the specified moment after the current moment. The terminal 100 may send the uplink data to the specified satellite of the satellite device 200 at the specified moment or after the specified moment. Specifically, for descriptions of determining the specified moment and the specified satellite by the terminal 100 through prediction, refer to the embodiment shown in FIG. 4. Details are not described herein again.

In some examples, when determining that no specified satellite exists at the current moment and the specified satellite exists at the specified moment, the terminal 100 may stop performing an operation of sending the uplink data. The terminal 100 may display prompt information indicating to the user that the uplink data fails to be sent. In this way, the user may determine that the sending operation fails.

In some examples, when determining that no specified satellite exists at the current moment and the specified satellite exists at the specified moment, the terminal 100 may further display prompt information indicating the user to send the uplink data at the specified moment. In this way, it is convenient for the user to learn a moment at which satellite communication quality recovers, and the user does not continue to send the uplink data at a moment at which satellite signal quality is poor, thereby increasing a sending success rate.

In some examples, the terminal 100 may display, at the specified moment, prompt information indicating the user to resend the uplink data at the specified moment. In this way, the terminal 100 may redisplay the prompt information indicating the user to send the uplink data at the specified moment, thereby avoiding missing an occasion of sending the uplink data because the user forgets the time.

In some other examples, the terminal 100 may send the uplink data at the specified moment when a time difference between the specified moment and the current moment is less than or equal to preset retransmission duration (for example, 3 minutes). When the time difference between the specified moment and the current moment is greater than the preset retransmission duration, the terminal 100 may cancel the operation of sending the uplink data, and display, at the current moment and/or the specified moment, the prompt information indicating the user to send the uplink data at the specified moment.

In some examples, before sending the uplink data at the specified moment, the terminal 100 may display a countdown, where the countdown may indicate a time difference from the specified moment. In this way, the user may determine, based on the countdown, a moment at which the terminal 100 sends the uplink data.

Optionally, in a process of sending the uplink data, the terminal 100 may further display prompt information indicating the user to maintain specified attitude. For example, the specified attitude may be attitude in which a radiation direction of a main lobe of an antenna radiation pattern of the terminal 100 is vertically directed to the sky, or the specified attitude may be attitude in which a radiation direction of a main lobe of an antenna radiation pattern of the terminal 100 is directed to a position of the specified satellite at the specified moment. In this way, the user maintains the specified attitude, which can increase a success rate of sending the uplink data.

Optionally, when the time difference between the specified moment and the current moment is less than the preset retransmission duration, the terminal 100 may display, starting from the current moment, the prompt information indicating the user to maintain the specified attitude. In this way, the terminal 100 indicates the user to maintain the specified attitude, so that the success rate of sending the uplink data by the terminal 100 can be increased.

Optionally, the terminal 100 may display, at the specified moment, prompt information indicating the user to perform a satellite alignment operation of aligning the radiation direction of the main lobe of the antenna radiation pattern of the terminal 100 with the specified satellite. In this way, the success rate of sending the uplink data can be increased by aligning with the specified satellite.

In some examples, when a quantity of specified satellites determined by the terminal 100 is greater than 1, the terminal 100 may select a target satellite according to a preset satellite selection rule. Alternatively, the terminal 100 may display a satellite selection interface, where the satellite selection interface includes a plurality of satellite icons, and the satellite icons are in a one-to-one correspondence with specified satellites. The satellite icon may be used to trigger the terminal 100 to determine a specified satellite corresponding to the satellite icon as the target satellite. In this way, the terminal 100 may determine the target satellite from the plurality of specified satellites.

Optionally, when determining that no specified satellite exists within first preset duration (for example, 20 minutes), the terminal 100 may display prompt information indicating the user to change a position for sending the uplink data. Optionally, the prompt information may indicate the user to move to a specified area (for example, an open area). In this way, the terminal 100 determines that the specified satellite may not appear at the current position for a long period of time, and may indicate the user to change the position and then send the uplink data.

In some examples, the terminal 100 may display an obstruction information diagram. In this way, the terminal 100 may indicate, by using the obstruction information diagram, whether the specified satellite exists in a visible range and the visible range of the terminal 100. This helps the user change the position for sending the uplink data, or wait for the specified satellite to move to the visible range.

In some examples, when determining that no specified satellite exists, the terminal 100 may display prompt information indicating to the user that a current sending success rate is low or current satellite signal quality is poor, a sending confirmation control, and a sending cancellation control. The sending confirmation control may be used to trigger the terminal 100 to send the uplink data to the satellite device 200. The sending cancellation control may be used to trigger the terminal 100 to cancel the operation of sending the uplink data. In this way, even if no specified satellite exists at the current moment, but the user has an urgent need to send the uplink data, the terminal 100 still performs the operation of sending the uplink data. Optionally, when displaying the prompt information indicating to the user that the current sending success rate is low or the current satellite signal quality is poor, the sending confirmation control, and the sending cancellation control, the terminal 100 may display the prompt information indicating the user to send the uplink data at the specified moment. Alternatively, when receiving an input of the user on the sending cancellation control, the terminal 100 may display, in response to the input, the prompt information indicating the user to send the uplink data at the specified moment. For details, refer to the foregoing embodiments. Details are not described herein again.

S707: Send the uplink data to a specified satellite when determining that the specified satellite whose line-of-sight elevation angle is greater than the preset angle and whose line of sight is not obstructed in a line-of-sight direction of the satellite exists in the satellites of the satellite device 200.

When determining that the specified satellite exists in the satellites of the satellite device 200 at the current moment, the terminal 100 may send the uplink data to the specified satellite of the satellite device 200.

Optionally, before sending the uplink data to the specified satellite of the satellite device 200, the terminal 100 may display prompt information indicating the user to perform a satellite alignment operation of aligning the radiation direction of the main lobe of the antenna radiation pattern of the terminal 100 with the specified satellite.

Optionally, in the process of sending the uplink data, the terminal 100 may further display prompt information indicating the user to maintain a specified attitude.

Optionally, when the quantity of specified satellites determined by the terminal 100 is greater than 1, the terminal 100 may select the target satellite according to the preset satellite selection rule, or Display the satellite selection interface used to select the target satellite. For details, refer to the foregoing embodiments. Details are not described herein again.

Optionally, when starting to send the uplink data to the specified satellite, the terminal 100 may display prompt information indicating to the user that the uplink data is being sent.

In some examples, in the process of sending the uplink data, the terminal 100 may detect in real time whether the specified satellite exists. When determining that the specified satellite exists, the terminal 100 may send the uplink data to the specified satellite. When determining that no specified satellite exists, the terminal 100 may suspend sending the uplink data, and continue to send the uplink data to the specified satellite at a predicted specified moment. In this way, the terminal 100 may send, based on positions of the terminal 100 and the satellite relative to each other, the uplink data in a time period in which satellite signal quality is good.

Optionally, after successfully sending the uplink data, the terminal 100 may display prompt information indicating that the uplink data is successfully sent. In this way, in the process of sending the uplink data by the terminal 100, satellite signal quality may deteriorate due to reasons such as movement of the specified satellite when the uplink data is sent. The terminal 100 may help the user learn a sending status of the uplink data by using the prompt information indicating that the uplink data is successfully sent.

It may be understood that, after receiving the uplink data sent by the terminal 100, the satellite device 200 may perform an operation corresponding to the uplink data. For example, if the uplink data includes the communication data sent to the called terminal, the satellite device 200 may send the communication data to the called terminal.

In this way, by performing the steps shown in FIG. 7, the terminal 100 can increase a success rate of sending the uplink data by the terminal 100, and help the user send the uplink data to the satellite device 200 more efficiently.

In some examples, the terminal 100 may determine, from satellites in a preset observation range, whether the specified satellite exists. In this way, because the satellites in the preset observation range are closer to the terminal 100, only line-of-sight directions of the satellites in the preset observation range and the obstruction information are determined, so that calculation overheads of the terminal 100 can be reduced, and efficiency of determining whether the specified satellite exists by the terminal 100 can be improved.

The following describes a diagram of modules of the terminal 100 according to an embodiment of this application.

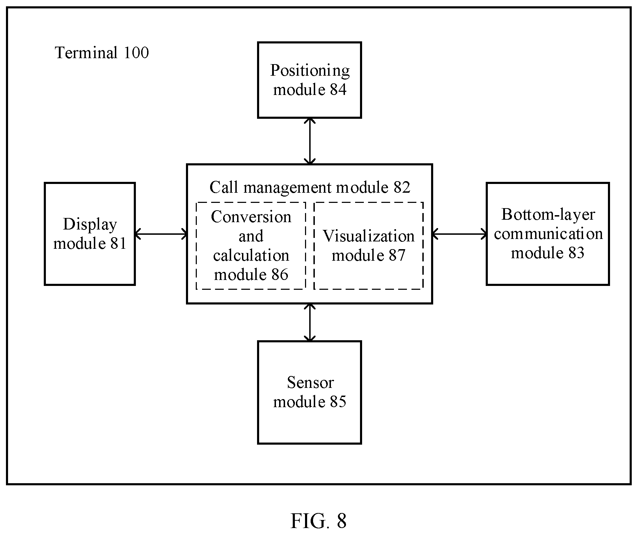

For example, as shown in FIG. 8, the terminal 100 includes one or more modules. The one or more modules may include but are not limited to a display module 81, a call management module 82, a bottom-layer communication module 83, a positioning module 84, and the like.

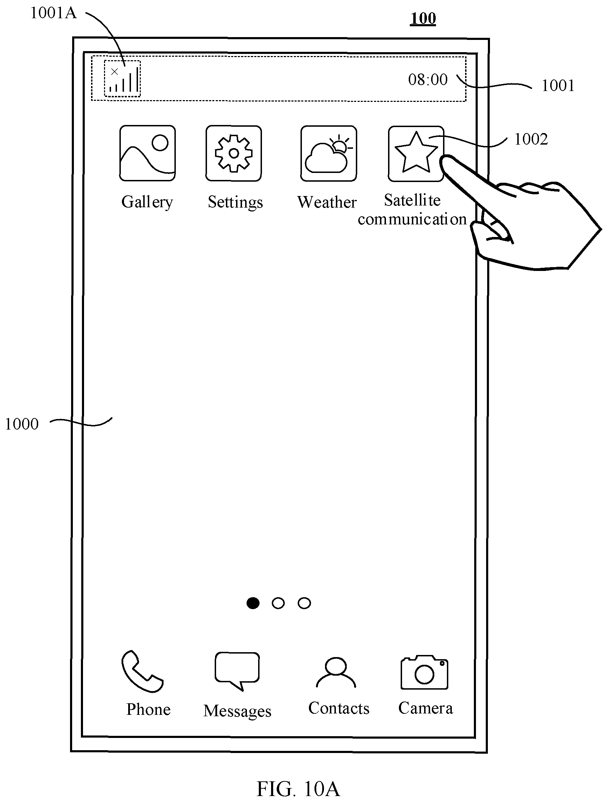

The display module 81 may be configured to display a user interface of the terminal 100, for example, user interfaces shown in FIG. 10A to FIG. 10F. In embodiments of this application, the display module 81 may receive a message sent by the call management module 82, and display corresponding prompt information.

The call management module 82 may be configured to manage and control services such as a call and an SMS message. The call management module 82 may be configured to interface with an Android application package (Android application package, APK) of each application, and provide a call management service for the application. The call management module 82 may further implement a wireless communication function through the bottom-layer communication module 83. In embodiments of this application, the call management module 82 may be configured to receive position information of the terminal 100 sent by the positioning module 84. The call management module 82 may be configured to determine line-of-sight directions of satellites of the satellite device 200 and obstruction information based on the position information of the terminal 100 and ephemeris information. The call management module 82 may be further configured to determine, based on the line-of-sight directions, the obstruction information, and a preset angle, whether a specified satellite exists at a current moment.

When determining that the specified satellite exists at the current moment, the call management module 82 may notify the bottom-layer communication module 83 to send uplink data to the specified satellite. Optionally, when determining that the specified satellite exists at the current moment, the call management module 82 may notify the display module 81 to display prompt information indicating that the uplink data is being sent. Optionally, when the bottom-layer communication module 83 sends the uplink data to the satellite device 200, the call management module 82 may display prompt information indicating to a user that the uplink data is successfully sent.

When determining that no specified satellite exists at the current moment, the call management module 82 may predict a specified satellite that exists at a specified moment. The call management module 82 may notify the display module 81 to display prompt information indicating the user to that the uplink data is to be sent at the specified moment. Optionally, the call management module 82 may notify, at the specified moment, the bottom-layer communication module 83 to send the uplink data to the specified satellite.

Optionally, the call management module 82 may be configured to detect a satellite network service status of the terminal 100. When determining that the satellite network service status of the terminal 100 is abnormal, the call management module 82 may cancel performing the step of sending the uplink data. When determining that the satellite network service status of the terminal 100 is normal, the call management module 82 may determine whether the specified satellite exists at the current moment.

Optionally, the call management module 82 includes a conversion and calculation module 86. The call management module 82 may determine a visible range of the terminal 100 and/or the obstruction information through the conversion and calculation module 86.

Optionally, the call management module 82 may further include a visualization module 87, and the visualization module 87 may be configured to draw an obstruction information diagram. The call management module 82 may send the obstruction information diagram to the display module 81, and the display module 81 may display the obstruction information diagram. In this way, the terminal 100 may indicate to the user whether a visible satellite exists in the visible range of the terminal 100, that is, whether the terminal 100 is currently suitable for sending the uplink data.

The bottom-layer communication module 83 may be configured to provide different wireless communication technology interfaces for the call management module 82, and implement a wireless communication function by invoking bottom-layer hardware through a kernel. For example, the bottom-layer communication module 83 belongs to a radio interface layer (radio interface layer, RIL), a kernel (kernel) layer, and a hardware layer. The bottom-layer communication module 83 includes a baseband integrated circuit (baseband integrated circuit, BBIC) at the hardware layer. In embodiments of this application, the bottom-layer communication module 83 may be configured to send the uplink data to the specified satellite. The bottom-layer communication module 83 may be further configured to receive downlink data sent by the satellite device 200.

The positioning module 84 may be configured to determine the position information of the terminal 100. For example, the positioning module 84 may include a GNSS. In embodiments of this application, the positioning module 84 may send the position information of the terminal 100 to the call management module 82.

Optionally, the terminal 100 may include a sensor module 85. The sensor module 85 may be configured to detect attitude information of the terminal 100. For example, the sensor module 85 may include but is not limited to one or more of a magnetometer, an accelerometer, a gyroscope, and the like. In some examples, the sensor module 85 may be configured to send the attitude information of the terminal 100 to the call management module 82. The call management module 82 may determine, based on the attitude information of the terminal 100, an angle deviation between a radiation direction of an antenna of the terminal 100 and a line-of-sight direction. The call management module 82 may notify the display module 81 to display prompt information including the angle deviation. In this way, the terminal 100 may accordingly indicate the user to perform a satellite alignment operation of aligning with the specified satellite. Because the specified satellite is within the visible range of the terminal 100, the user can more conveniently align the radiation direction of the antenna of the terminal 100 with the specified satellite, thereby reducing difficulty in performing the satellite alignment operation. In addition, after the radiation direction of the antenna of the terminal 100 is aligned with the specified satellite, a success rate of sending the uplink data by the terminal 100 can be further increased.

It may be understood that the plurality of modules shown in this embodiment of this application do not constitute a specific limitation on the terminal 100. In some other examples of this application, the terminal 100 may include more or fewer modules than those shown in the figure, some modules may be combined, some modules may be split, or there may be different module layouts. The modules shown in the figure may be implemented by hardware, software, or a combination of software and hardware.

The following uses a calling scenario as an example to describe a communication method according to an embodiment of this application with reference to the modules shown in FIG. 8.

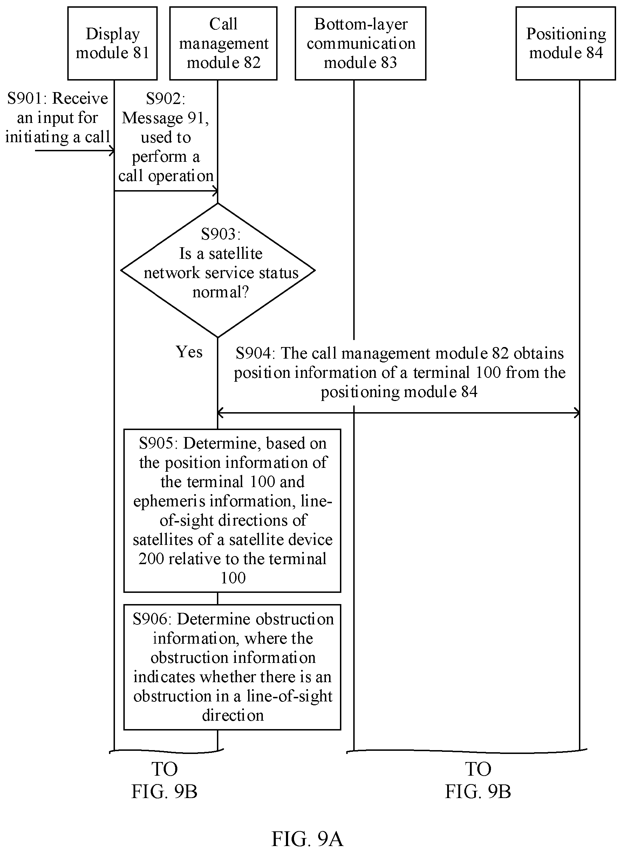

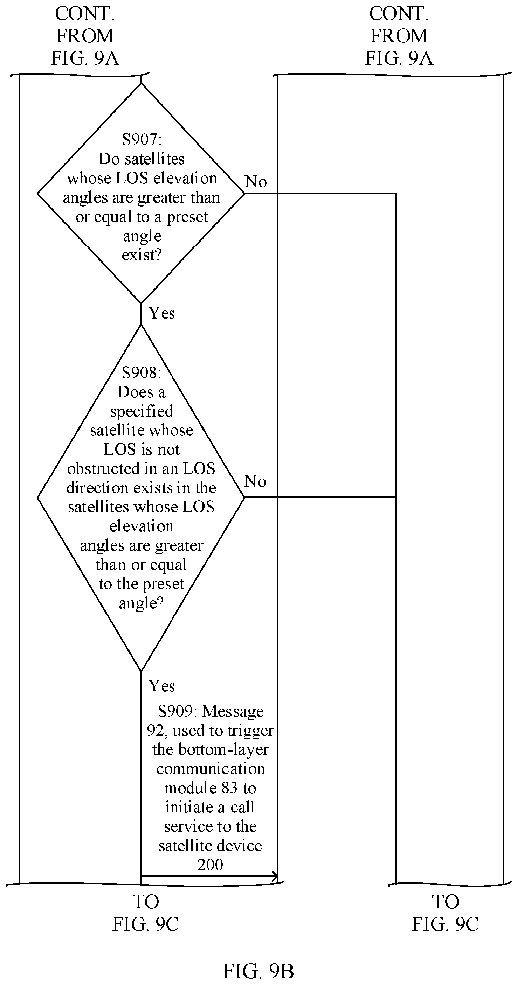

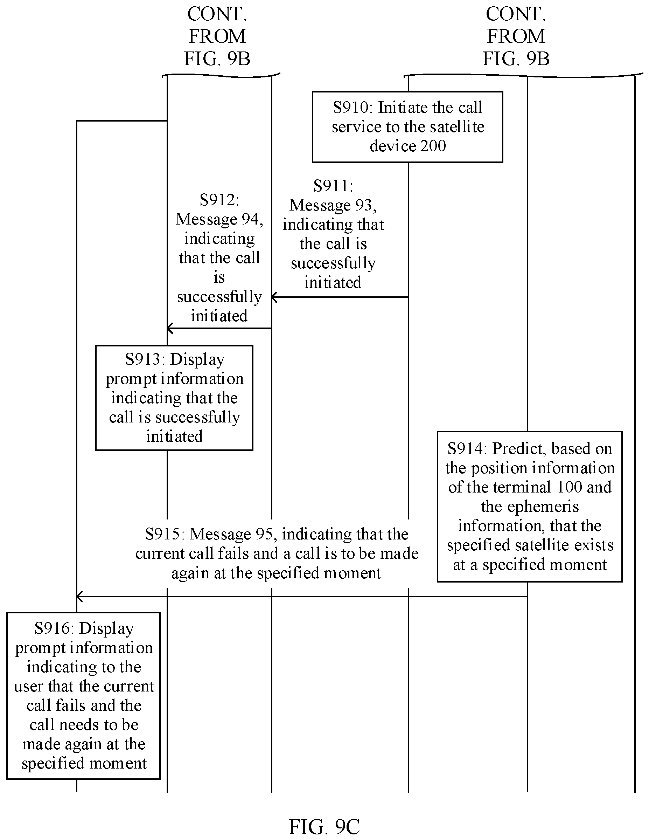

For example, as shown in FIG. 9A to FIG. 9C, the communication method includes the following steps.

S901: The display module 81 receives an input for initiating a call.

The display module 81 displays a specified interface, and the specified interface may be used to trigger the terminal 100 to send uplink data to the satellite device 200. The display module 81 may perform step S902 after detecting the input for initiating a call to the satellite device 200.

S902: The display module 81 sends a message 91 to the call management module, to perform a call operation.

The display module 81 may send the message 91 to the call management module after detecting the input for initiating a call to the satellite device 200. The message 91 may be used to trigger the call management module 82 to perform the call operation.

S903: The call management module 82 determines whether a satellite network service status is normal.

After receiving the message 91, the call management module 82 may determine whether the satellite network service status of the terminal 100 is normal. The call management module 82 may perform step S904 when determining that the satellite network service status is normal. When determining that the satellite network service status is abnormal, the call management module 82 may notify the display module 81 to display prompt information indicating to a user that the call fails due to an exception of the satellite network.

S904: The call management module 82 obtains position information of the terminal 100 from the positioning module 84.

When determining that the network service status is normal, the call management module 82 may obtain the position information of the terminal 100 from the positioning module 84.

S905: The call management module 82 determines, based on the position information of the terminal 100 and ephemeris information, line-of-sight directions of satellites of the satellite device 200 relative to the terminal 100.

After obtaining the position information of the terminal 100, the call management module 82 may determine, based on the position information of the terminal 100 and the ephemeris information, the line-of-sight directions of the satellites of the satellite device 200 relative to the terminal 100. The position information obtained by the call management module 82 includes longitude, latitude, and a height.

S906: The call management module 82 determines obstruction information, where the obstruction information indicates whether there is an obstruction in the line-of-sight direction.

The call management module 82 may determine the obstruction information. Specifically, for descriptions of determining the obstruction information by the call management module 82, refer to the foregoing embodiments. Details are not described herein again. It may be understood that a sequence of performing step S906 and step S907 by the call management module 82 is not limited in embodiments of this application.

S907: The call management module 82 determines whether satellites whose line-of-sight elevation angles are greater than or equal to a preset angle exist.

After determining the line-of-sight direction, the call management module 82 may determine line-of-sight elevation angles based on the line-of-sight direction, and determine whether the satellites, of the satellite device 200, whose line-of-sight elevation angles are greater than or equal to the preset angle exist. The call management module 82 may perform step S908 when determining that the satellites whose line-of-sight elevation angles are greater than or equal to the preset angle exist. The call management module 82 may perform step S914 when determining that no satellite whose line-of-sight elevation angle is greater than or equal to the preset angle exists.

S908: The call management module 82 determines whether a specified satellite whose line of sight is not obstructed in a line-of-sight direction exists in the satellites whose line-of-sight elevation angles are greater than or equal to the preset angle.

When determining that the satellites whose line-of-sight elevation angles are greater than or equal to the preset angle exist, the call management module 82 may determine whether the specified satellite whose line of sight is not obstructed in the line-of-sight direction exists in the satellites whose line-of-sight elevation angles are greater than or equal to the preset angle. The call management module 82 may perform step S909 when determining that the specified satellite exists. The call management module 82 may perform step S914 when determining that no specified satellite exists.

It should be noted that, not limited to step S907 and step S908, the call management module 82 may first determine whether satellites that are not obstructed in line-of-sight directions exist. The call management module 82 may perform step S914 when determining that no satellite whose line of sight is not obstructed in a line-of-sight direction exists. When determining that the satellites that are not obstructed in the line-of-sight directions exist, the call management module 82 may determine whether a specified satellite whose line-of-sight elevation angle is greater than or equal to the preset angle exists in the satellites that are not obstructed in the line-of-sight directions. The call management module 82 may perform step S909 when determining that the specified satellite whose line-of-sight elevation angle is greater than or equal to the preset angle exists in the satellites that are not obstructed in the line-of-sight directions. The call management module 82 may perform step S914 when determining that no specified satellite exists. Alternatively, the call management module 82 may simultaneously determine whether a line-of-sight elevation angle of one satellite is greater than or equal to the preset angle and whether there is no obstruction in a line-of-sight direction of the satellite, that is, determine whether the specified satellite exists. The call management module 82 may perform step S914 when determining that the specified satellite exists. The call management module 82 may perform step S909 or the like when determining that no specified satellite exists. This is not limited in embodiments of this application.

It may be understood that, in embodiments of this application, that no satellite whose line-of-sight elevation angle is greater than or equal to the preset angle exists (that is, the line-of-sight elevation angles of all the satellites are less than the preset angle) may be understood as that no specified satellite exists. That no satellite whose line of sight is not obstructed in a line-of-sight direction exists (that is, there are obstructions in the line of sight path directions of all the satellites) may also be understood as that no specified satellite exists.

S909: The call management module 82 sends a message 92 to the bottom-layer communication module 83, to trigger the bottom-layer communication module 83 to initiate a call service to the satellite device 200.

When determining that the specified satellite exists, the call management module 82 may send the message 92 to the bottom-layer communication module 83. The message 92 may be used to trigger the bottom-layer communication module 83 to initiate the call service to the satellite device 200.

Optionally, before sending the message 92 to the bottom-layer communication module 83, the call management module 82 may obtain attitude information of the terminal 100 from the sensor module 85. The call management module 82 may determine, based on the attitude information of the terminal 100, the position information of the terminal 100, and position information of the satellite, prompt information used to guide the user to perform satellite alignment. Before notifying the bottom-layer communication module 83 to perform the call operation, the call management module 82 may notify the display module 81 to display the prompt information, and when determining that a radiation direction of an antenna of the terminal 100 is aligned with the satellite, notify the bottom-layer communication module 83 to perform an operation of initiating the call service.

S910: The bottom-layer communication module 83 initiates the call service.

When receiving the message 92, the bottom-layer communication module 83 may initiate the call service to the specified satellite of the satellite device 200.

S911: The bottom-layer communication module 83 sends a message 93 to the call management module 82, to indicate that the call is successfully initiated.

The bottom-layer communication module 83 may send the message 93 to the call management module 82 when the call service is successfully initiated, and the message 93 may indicate that the terminal 100 successfully initiates the call. That the bottom-layer communication module 83 successfully initiates the call service may indicate that the bottom-layer communication module 83 successfully sends signaling of the call service to the specified satellite of the satellite device 200.

For example, the bottom-layer communication module 83 may perform a random access procedure when receiving the message 92, to implement uplink synchronization between the terminal 100 and the satellite device 200. After uplink synchronization between the terminal 100 and the satellite device 200 is completed, the bottom-layer communication module 83 may send the signaling of the call service to the specified satellite of the satellite device 200.

S912: The call management module 82 sends a message 94 to the display module 81, to indicate that the call is successfully initiated.

The call management module 82 may send the message 94 to the display module 81 when receiving the message 93, and the message 94 may indicate that the call is successfully initiated.

S913: The display module 81 displays prompt information indicating that the call is successfully initiated.

When receiving the message 94, the display module 81 may display the prompt information indicating that the call is successfully initiated. For example, the display module 81 may display prompt information indicating to the user that the terminal 100 is in a call. In this way, the prompt information displayed by the display module 81 may indicate to the user that the call service has been successfully initiated to the satellite device 200. The satellite device 200 may perform a corresponding operation after receiving the signaling of the call service of the terminal 100. For example, in a call scenario, the satellite device 200 may initiate a call service to a called terminal.

S914: The call management module 82 predicts, based on the position information of the terminal 100 and the ephemeris information, that the specified satellite exists at a specified moment.

When determining that no specified satellite exists, the call management module 82 may predict, based on the position information of the terminal 100 and the ephemeris information, that the specified satellite exists at the specified moment. For details, refer to the foregoing embodiments. Details are not described herein again. The terminal 100 may perform step S915 when determining that the specified satellite exists at the specified moment.

S915: The call management module 82 sends a message 95 to the display module 81, to indicate that a current call fails and that a call needs to be made again at the specified moment.

The call management module 82 may send a message 95 to the display module 81 when determining that the specified satellite exists at the specified moment, and the message 95 may indicate that the current call fails and that the call needs to be made again at the specified moment.

In some other examples, when determining that no specified satellite exists, the call management module 82 may notify the display module to display prompt information indicating to the user that the current call fails and that the call needs to be made later.

S916: The display module 81 displays prompt information indicating to the user that the current call fails and that a call needs to be made again at the specified moment.

When receiving the message 95, the display module 81 may display the prompt information indicating to the user that the current call fails and that the call needs to be made again at the specified moment. Specifically, for descriptions of displaying the prompt information by the display module 81, refer to the embodiments shown in FIG. 10A to FIG. 10F. For some descriptions of the steps shown in FIG. 9A to FIG. 9C, refer to the foregoing embodiments. Details are not described herein again.

In this way, the terminal 100 may implement a calling procedure through the plurality of modules shown in FIG. 8, thereby reducing power consumption of the terminal 100 and increasing a call success rate of the terminal 100.

In a possible implementation, when receiving an input for sending uplink data, the terminal 100 may determine, based on the position information of the terminal 100 and position information of the satellites of the satellite device 200, whether the specified satellite exists. For details, refer to the foregoing embodiments. Details are not described herein again. When determining that the specified satellite exists, the terminal 100 may send the uplink data to the specified satellite and display prompt information indicating that the uplink data is being sent. When determining that no specified satellite exists, the terminal 100 may display prompt information indicating that the uplink data fails to be sent. In this way, the terminal 100 may predict, based on whether the specified satellite exists, a success rate of an operation of sending the uplink data by the terminal 100. When determining that the specified satellite exists, the terminal 100 may determine that the success rate of the operation of sending the uplink data this time is high, and perform the operation of sending the uplink data. When determining that no specified satellite exists, the terminal 100 may determine that the success rate of the operation of sending the uplink data this time is low, and cancel the operation of sending the uplink data, thereby reducing power consumption caused by a failure of sending the uplink data by the terminal 100.

In some other examples, when determining that the specified satellite exists, the terminal 100 may send the uplink data to the specified satellite. When successfully sending the uplink data, the terminal 100 may display prompt information indicating that the uplink data is successfully sent.

In some examples, the terminal 100 displays a dialing interface, the dialing interface includes one or more dialing items, and the dialing item may be used to trigger the terminal 100 to dial a called terminal corresponding to the dialing item. After receiving an input on the dialing item, the terminal 100 may display, in response to the input, prompt information indicating to the user that the terminal 100 is dialing, and determine whether the specified satellite exists. When determining that no specified satellite exists, the terminal 100 may display prompt information indicating to the user that dialing fails. When determining that the specified satellite exists, the terminal 100 may initiate a call connection to the called terminal through the specified satellite, and continue to display the prompt information indicating to the user that the terminal 100 is dialing. In this way, when making a call, the terminal 100 can improve a call completion rate by using the communication method provided in embodiments of this application.

It should be noted that, when displaying the prompt information indicating to the user that the terminal 100 is dialing and determining that the specified satellite exists, initiating the call connection to the called terminal through the specified satellite and continuing to display the prompt information indicating to the user that the terminal 100 is dialing, and receiving signaling that is sent by the satellite device 200 and that indicates that the called terminal answers the call, the terminal 100 displays a call screen used to indicate to the user that the terminal 100 successfully dials. The call screen indicating that dialing succeeds may prompt that the user of the terminal 100 can talk to a user of the called terminal. When determining that the specified satellite exists, initiating a call connection to the called terminal through the specified satellite and continuing to display the prompt information indicating to the user that the terminal 100 is dialing, and receiving signaling that is sent by the satellite device 200 and that indicates that the called terminal declines the call, the terminal 100 displays prompt information indicating to the user that the terminal 100 is not answered by the called terminal.

In some other examples, after receiving an input on a dialing item, the terminal 100 may determine, in response to the input, whether the specified satellite exists. When determining that the specified satellite exists, the terminal 100 may dial the called terminal through the specified satellite, and display prompt information indicating to the user that the terminal 100 is dialing. When determining that no specified satellite exists, the terminal 100 may display prompt information indicating to the user that dialing fails. In this way, a success rate of making a satellite phone call by the terminal 100 can be increased, and power consumption caused by a plurality of dialing attempt failures of the terminal 100 can be reduced.

In some examples, when determining that no specified satellite exists, the terminal 100 may predict the specified moment at which the specified satellite appears. For details, refer to the foregoing embodiments. Details are not described herein again. The terminal 100 may display, at a current moment and/or the specified moment, prompt information indicating the user to dial again at the specified moment. In this way, the terminal 100 may notify the user to dial again at the specified moment, thereby increasing a dialing success rate of the user.

In some examples, the terminal 100 may set, at the current moment, an alarm clock that rings at the specified moment. The terminal 100 may ring at the specified moment, and display the prompt information indicating the user to dial again at the specified moment. For example, the terminal 100 may set, as a name of the alarm clock, the prompt information indicating the user to dial again at the specified moment. Optionally, when a time difference between the specified moment and the current moment is greater than second preset duration (for example, 5 minutes), the terminal 100 may set the alarm clock that rings at the specified moment. In this way, the terminal 100 may indicate the user in time to resend the uplink data at the specified moment, thereby avoiding a case in which the user misses an occasion of sending the uplink data with a higher success rate.

In some other examples, when determining, through prediction, the specified moment at which the specified satellite appears, the terminal 100 may determine whether the time difference between the specified moment and the current moment is less than preset retransmission duration. When determining that the time difference between the specified moment and the current moment is less than or equal to the preset retransmission duration, the terminal 100 may dial the called terminal through the specified satellite at the specified moment. When determining that the time difference between the specified moment and the current moment is greater than the preset retransmission duration, the terminal 100 may display the prompt information indicating the user to dial again at the specified moment.

Optionally, in a process in which the terminal 100 displays the dialing interface, when determining that the time difference between the specified moment and the current moment is less than or equal to the preset retransmission duration, the terminal 100 may display the prompt information indicating to the user that the terminal 100 is dialing, and dial the called terminal through the specified satellite at the specified moment.

Optionally, when determining that the time difference between the specified moment and the current moment is less than or equal to the preset retransmission duration, the terminal 100 may display prompt information indicating the user to wait for dialing. In this way, a case in which the user declines the call before the specified moment because waiting time is excessively long can be avoided, and a call success rate of the terminal 100 can be increased.

Optionally, when determining that the time difference between the specified moment and the current moment is less than or equal to the preset retransmission duration, the terminal 100 may display prompt information indicating the user to wait for preset call duration. The preset call duration is greater than or equal to the time difference between the current moment and the specified moment.

Optionally, when determining that no specified satellite exists within first preset duration (for example, 20 minutes), the terminal 100 may display prompt information indicating the user to change a position and then dial again. Optionally, the prompt information may indicate the user to move to a specified area (for example, an open area). In this way, the terminal 100 determines that the specified satellite may not appear at the current position for a long period of time, and may indicate the user to change the position and then dial again.

In some examples, when determining that no specified satellite exists, the terminal 100 may display prompt information indicating to the user that a current dialing success rate is low or current satellite signal quality is poor, and display a dialing confirmation control and a dialing cancellation control. The dialing confirmation control may be used to trigger the terminal 100 to initiate the call connection to the called terminal through the specified satellite. The dialing cancellation control may be used to trigger the terminal 100 to cancel a dialing operation. In this way, even if no specified satellite exists at the current moment, and the dialing success rate is low, the terminal 100 still performs the dialing operation when the user urgently needs to call the called terminal. Optionally, when displaying the prompt information indicating to the user that the current dialing success rate is low or the current satellite signal quality is poor, the dialing confirmation control, and the dialing cancellation control, the terminal 100 may display prompt information indicating the user to dial at the specified moment. Alternatively, when receiving an input of the user on the dialing cancellation control, the terminal 100 may display, in response to the input, prompt information indicating the user to dial at the specified moment. For details, refer to the foregoing embodiments. Details are not described herein again.

The following describes, with reference to a call scenario, an example of a group of user interfaces provided in an embodiment of this application.

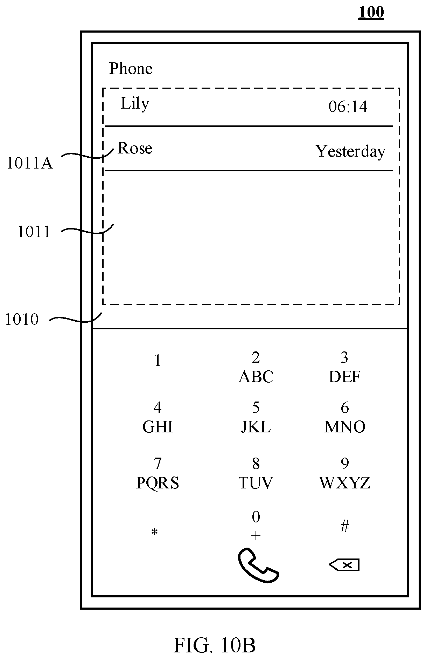

For example, as shown in FIG. 10A, the terminal 100 displays a home screen 1000. The home screen 1000 may include a plurality of application icons, for example, a satellite communication application icon 1002. The satellite communication application icon 1002 may be used to trigger display of an interface of a satellite communication application (for example, a dialing interface 1010 shown in FIG. 10B). The satellite communication application may be used to make or answer a satellite call. For example, the satellite communication application may be Phone, MeeTime, or the like. A status bar 1001 may be further displayed on an upper part of the home screen 1000, and a prompt icon 1001A may be displayed in the status bar 1001. The prompt icon 1001A may indicate the terminal 100 to disconnect a communication connection from a terrestrial network. In this case, the terminal 100 is in a state in which there is no terrestrial network signal.

After receiving an input (for example, a tap) of a user on the satellite communication application icon 1002, the terminal 100 may display, in response to the input, the dialing interface 1010 shown in FIG. 10B. As shown in FIG. 10B, the dialing interface 1010 may be used to provide a dialing function for the user. The dialing interface 1010 may include but is not limited to a display area 1011. The display area 1011 may be used to display a dialing item, and the dialing item may be used to trigger the terminal 100 to dial a corresponding contact. The display area 1011 includes a dialing item 1011A. The dialing interface 1010 may further include a dialing button area, and the dialing button area may be used to receive an input of the user, and enter a number of a contact and make a call.

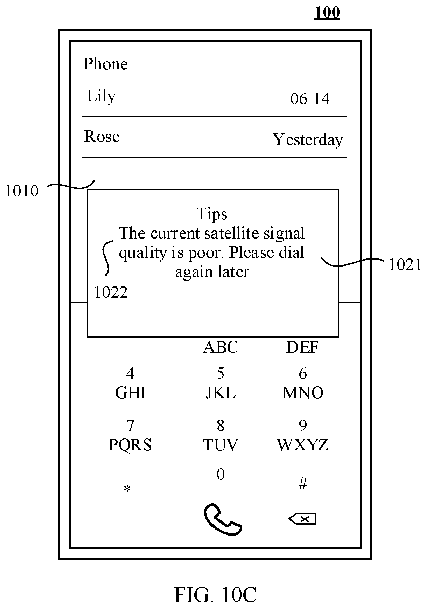

After receiving an input of the user on the dialing item 1011A, the terminal 100 may determine, in response to the input, whether a specified satellite exists. For details, refer to the embodiments shown in FIG. 7 to FIG. 9C. Details are not described herein again. When determining that no specified satellite exists, the terminal 100 may display a prompt box 1021 shown in FIG. 10C. As shown in FIG. 10C, the prompt box 1021 includes prompt information 1022, and the prompt information 1022 may indicate to the user that current satellite signal quality is poor and the user can dial the number later. For example, the prompt information 1022 may include text prompt information: "The current satellite signal quality is poor. Please dial again later".

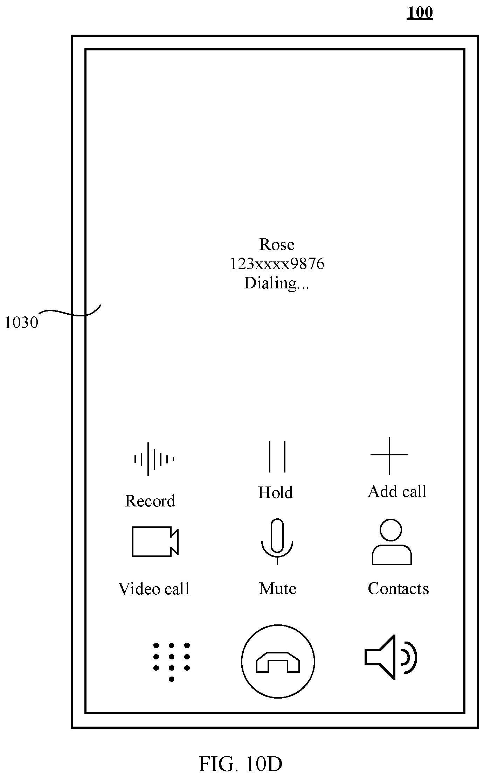

When determining that the specified satellite exists, the terminal 100 may display a call screen 1030 shown in FIG. 10D, and establish a call connection to a called terminal through the specified satellite. As shown in FIG. 10D, the call screen 1030 may be used to perform telephone communication with a contact "Rose". The call screen 1030 may indicate to the user that the terminal 100 successfully initiates a call.

In some other examples, when determining that no specified satellite exists at a current moment, the terminal 100 may predict a specified moment at which the specified satellite appears. When determining that a time difference between the specified moment and the current moment is less than preset retransmission duration, the terminal 100 may display the call screen 1030 shown in FIG. 10D. Optionally, the terminal 100 may further display, on the call screen 1030 shown in FIG. 10D, prompt information indicating the user to wait for preset call duration. The preset call duration is greater than or equal to the time difference between the current moment and the specified moment.

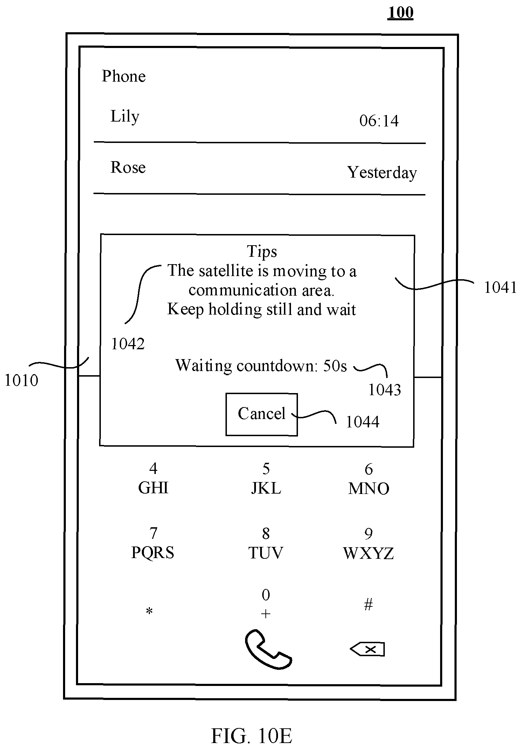

In some other examples, when determining that no specified satellite exists at a current moment, the terminal 100 may predict a specified moment at which the specified satellite appears, and the terminal 100 may display a prompt box 1041 shown in FIG. 10E. As shown in FIG. 10E, the prompt box 1041 is displayed on the dialing interface 1010, the prompt box 1041 includes prompt information 1042, and the prompt information 1042 may be prompt information indicating to the user that the terminal 100 may dial at the specified moment. For example, the prompt information 1042 may include text prompt information: "The satellite is moving to a communication area. Keep holding still and wait".

Optionally, the terminal 100 may display a countdown after the terminal 100 obtains, through prediction, the specified moment at which the specified satellite appears, or when the terminal 100 determines that the time difference between the specified moment and the current moment is less than the preset retransmission duration. The countdown may indicate a time difference from the specified moment. For example, the terminal 100 may further display a countdown 1043 when displaying the dialing interface 1010 shown in FIG. 10E. The countdown 1043 may include text information: "Waiting countdown: 50s".

Optionally, the terminal 100 may further display a cancel control when displaying prompt information indicating the user to dial at the specified moment. The cancel control may be used to trigger the terminal 100 to cancel an operation of dialing at the specified moment. For example, the terminal 100 may further display a cancel control 1044 when displaying the prompt box 1041 shown in FIG. 10E. The cancel control 1044 may be used to trigger the terminal 100 to cancel the operation of dialing at the specified moment.

In some other examples, when determining that no specified satellite exists within first preset duration (for example, 20 minutes), the terminal 100 may display prompt information indicating the user to change a dialing position.

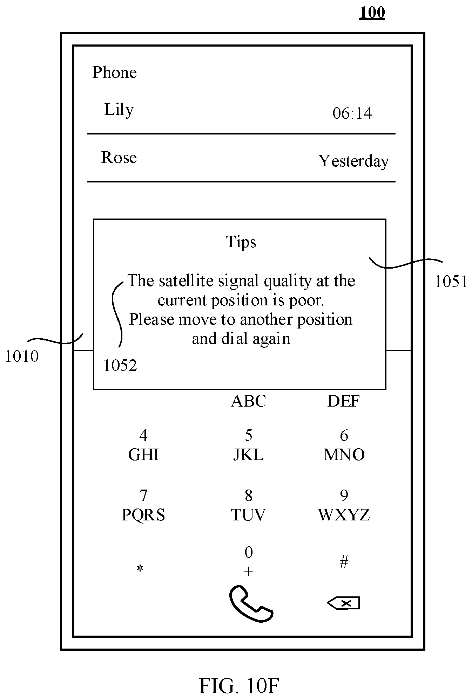

For example, after receiving the input of the user on the dialing item 1011A, the terminal 100 may determine, in response to the input, whether the specified satellite exists. When determining that no specified satellite exists within the first preset duration, the terminal 100 may display a prompt box 1051 shown in FIG. 10F. As shown in FIG. 10F, the prompt box 1051 includes prompt information 1052, and the prompt information 1052 may indicate the user to change the dialing position. For example, the prompt information 1052 may include text prompt information: "The satellite signal quality at the current position is poor. Please move to another position and dial again".

In some examples, the terminal 100 displays a communication interface (for example, an SMS message interface or an instant messaging application interface), and the communication interface includes uplink data (for example, text data, voice data, or image data) entered by the user and a sending control. The sending control may be used to trigger the terminal 100 to send uplink data to a receiver (for example, the called terminal or a server). After receiving an input on the sending control, the terminal 100 may display, in response to the input, prompt information indicating to the user that the terminal 100 is sending the uplink data, and determine whether the specified satellite exists. When determining that no specified satellite exists, the terminal 100 may display prompt information indicating to the user that the uplink data fails to be sent. When determining that the specified satellite exists, the terminal 100 may send the uplink data to the receiver through the specified satellite, and continue to display the prompt information indicating to the user that the terminal 100 is sending the uplink data. In this way, when it is determined that no specified satellite exists, the operation of sending the uplink data may not be performed, and the user is prompted that the uplink data fails to be sent. By canceling the sending operation with a low sending success rate, power consumption of the terminal 100 is reduced.

When the terminal 100 displays the prompt information indicating to the user that the terminal 100 is sending the uplink data, and receives signaling that is sent by the satellite device 200 and that indicates to send the uplink data to the receiver, the terminal 100 may display prompt information indicating to the user that the uplink data is successfully sent. When the terminal 100 displays the prompt information indicating to the user that the terminal 100 is sending the uplink data, and receives signaling that is sent by the satellite device 200 and that indicates that the uplink data fails to be sent, the terminal 100 may display the prompt information indicating to the user that the uplink data fails to be sent.

In some examples, when determining that no specified satellite exists, the terminal 100 may predict the specified moment at which the specified satellite appears. The terminal 100 may display, at the current moment and/or the specified moment, prompt information indicating the user to resend the uplink data at the specified moment.

Optionally, the terminal 100 may send the uplink data to the specified satellite at the specified moment, and display the prompt information indicating to the user that the terminal 100 is sending the uplink data.

Optionally, when determining that no specified satellite exists within the first preset duration, the terminal 100 may display prompt information indicating the user to change a position and then send the uplink data. Optionally, the prompt information may indicate the user to move to a specified area (for example, an open area).

In some examples, when sending the uplink data to the specified satellite, the terminal 100 may display prompt information indicating to the user that the uplink data is successfully sent to a satellite network. In this way, if the receiver is a called terminal, the called terminal may be offline, and the satellite device 200 cannot send the uplink data to the called terminal. The satellite device 200 may store the uplink data, and notify the terminal 100 that the uplink data is successfully received.

In some examples, when determining that no specified satellite exists, the terminal 100 may display prompt information indicating to the user that a current sending success rate is low or current satellite signal quality is poor, a sending confirmation control, and a sending cancellation control. The sending confirmation control may be used to trigger the terminal 100 to send the uplink data to the satellite device 200. The sending cancellation control may be used to trigger the terminal 100 to cancel the sending operation. Optionally, when displaying the prompt information indicating to the user that the current sending success rate is low or the current satellite signal quality is poor, the sending confirmation control, and the sending cancellation control, the terminal 100 may display prompt information indicating the user to send the uplink data at the specified moment. Alternatively, when receiving an input of the user on the sending cancellation control, the terminal 100 may display, in response to the input, prompt information indicating the user to send the uplink data at the specified moment. For details, refer to the foregoing embodiments. Details are not described herein again.

It may be understood that, for descriptions of sending the uplink data to the satellite device 200 when the terminal 100 displays a communication interface, refer to the foregoing related embodiments in which the terminal 100 displays the dialing interface. Details are not described herein again.

In a possible implementation, the terminal 100 may obtain position information of the terminal 100 and position information of satellites of the satellite device 200. The terminal 100 may determine, based on the position information of the terminal 100 and the position information of the satellites of the satellite device 200, line-of-sight directions of the satellites of the satellite device 200 relative to the terminal 100. The terminal 100 may further determine obstruction information, where the obstruction information may indicate whether there is an obstruction in the line-of-sight direction.

The terminal 100 performs a network search operation in a first network search mode determining that line-of-sight elevation angles of all the satellites of the satellite device 200 are less than a preset angle and/or there are obstructions in the line-of-sight directions of the satellites, that is, when no specified satellite whose line-of-sight elevation angle is greater than or equal to the preset angle and whose line of sight is not obstructed in a line-of-sight direction exists in the satellites of the satellite device 200. A time interval at which the terminal 100 performs network searching in the first network search mode gradually decreases. The terminal 100 performs network searching at a moment 7, a moment 8, and a moment 9 in the first network search mode, and a time interval between the moment 8 and the moment 7 is greater than or equal to a time interval between the moment 9 and the moment 8.

The terminal 100 performs a network search operation in a second network search mode when determining that a specified satellite whose line-of-sight elevation angle is less than or equal to the preset angle and whose line of sight is not obstructed in a line-of-sight direction exists in the satellites of the satellite device 200. A time interval at which the terminal 100 performs network searching in the second network search mode gradually increases. The satellite device 200 sends network search messages to the terminal 100 at a moment 10, a moment 11, and a moment 12 in the second network search mode, and a time interval between the moment 11 and the moment 10 is less than or equal to a time interval between the moment 11 and the moment 12.

In this way, after disconnecting from the network, the terminal 100 in the satellite network may determine, based on the line-of-sight elevation angles and the obstruction information, how to perform a network search operation. When signal quality of the satellite network is poor (that is, no specified satellite exists), the terminal 100 may perform network searching at the current moment at a low network search frequency. A network search failure rate of the terminal 100 is high when the signal quality of the satellite network is poor. The terminal 100 may perform network searching at the current moment at a low network search frequency, thereby reducing power consumption of the terminal 100 in performing network searching. As time elapses, the specified satellite moves to an area above the terminal 100, and a probability that the terminal 100 successfully performs network searching increases. The terminal 100 gradually increases a network search frequency, thereby ensuring that the terminal 100 successfully performs network searching. When the signal quality of the satellite network is good (that is, the specified satellite exists), the terminal 100 may perform network searching at the current moment at a high network search frequency. A probability that the terminal 100 finds a signal of the specified satellite is high, so that a probability that the terminal 100 quickly performs network searching successfully is higher. As time elapses, the terminal 100 may gradually decrease the network search frequency. Because the terminal 100 does not find the signal of the specified satellite at the high network search frequency, the terminal 100 tends to consider that a network search success rate is low at this time, and may gradually decrease the network search frequency. In addition, the specified satellite gradually moves away from the area above the terminal 100, a distance between the terminal 100 and the specified satellite increases, and the network search success rate of the terminal 100 is lower. The terminal 100 may reduce, by decreasing the network search frequency, power consumption caused by a network search attempt failure.

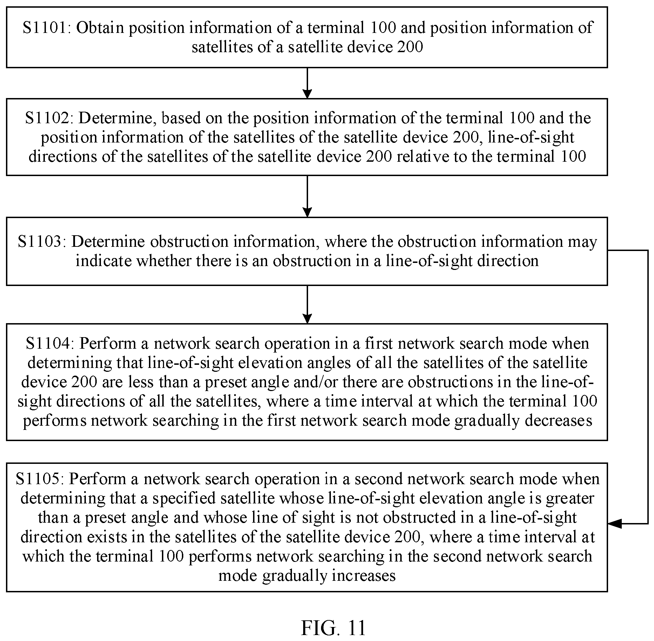

For example, as shown in FIG. 11, a communication method provided in an embodiment of this application may include the following steps.

S1101: The terminal 100 obtains position information of the terminal 100 and position information of satellites of the satellite device 200.

S1102: The terminal 100 determines, based on the position information of the terminal 100 and the position information of the satellites of the satellite device 200, line-of-sight directions of the satellites of the satellite device 200 relative to the terminal 100.

S1103: The terminal 100 determines obstruction information, where the obstruction information may indicate whether there is an obstruction in a line-of-sight direction.

Specifically, for descriptions of step S1101 to step S1103, refer to the embodiments shown in FIG. 4 and FIG. 7. Details are not described herein again.

S1104: Perform a network search operation in a first network search mode when determining that line-of-sight elevation angles of all the satellites of the satellite device 200 are less than a preset angle and/or there are obstructions in the line-of-sight directions of all the satellites, where a time interval at which the terminal 100 performs network searching in the first network search mode gradually decreases.

The terminal 100 may perform network searching in the first network search mode when determining that there are obstructions in the line-of-sight directions of all the satellites of the satellite device 200 and/or the line-of-sight elevation angles of the satellites are less than the preset angle. When the terminal 100 is in the first network search mode, a time interval between two adjacent network search moments of the terminal 100 gradually decreases, and a call frequency of the terminal 100 gradually increases. It should be noted that, in a process of decreasing a network search time interval, the terminal 100 may keep the network search time interval unchanged within a specific time period. This is not limited in embodiments of this application.

In some examples, when determining that there are obstructions in all the line-of-sight directions and/or that all the line-of-sight elevation angles are less than the preset angle, the terminal 100 may predict, based on the position information of the terminal 100 and ephemeris information, a specified moment at which a specified satellite appears. The terminal 100 may perform a network search operation in the second network search mode at the specified moment or after the specified moment.

In some examples, the terminal 100 may stop the network search operation when determining that no specified satellite exists within first preset duration. In this way, time in which no specified satellite exists in an area above the terminal 100 is long, and a network search success rate is low while power consumption of the terminal 100 is reduced. The terminal 100 stops the network search operation, so that power consumption of the terminal 100 can be reduced. Optionally, the terminal 100 may display prompt information indicating to a user to change a position. In this way, the terminal 100 may perform a network search operation at a position after movement.

S1105: Perform a network search operation in a second network search mode when determining that a specified satellite whose line-of-sight elevation angle is greater than the preset angle and whose line of sight is not obstructed in a line-of-sight direction exists in the satellites of the satellite device 200, where a time interval at which the terminal 100 performs network searching in the second network search mode gradually increases.

When the terminal 100 determines that the specified satellite exists, the terminal 100 may perform network searching in the second network search mode. When the terminal 100 is in the second network search mode, a time interval between two adjacent network search moments of the terminal 100 gradually increases, and a call frequency of the terminal 100 gradually decreases. It should be further noted that, in a process of decreasing the time interval, the terminal 100 may keep the time interval unchanged within a specific time period. This is not limited in embodiments of this application.

In some examples, when determining that the specified satellite exists, the terminal 100 may predict, based on the position information of the terminal 100 and the ephemeris information, a leaving moment at which the specified satellite leaves a visible range of the terminal 100. The terminal 100 may perform the network search operation in the first network search mode at the leaving moment or after the leaving moment.

In some other examples, when determining that no specified satellite exists at a current moment, the terminal 100 may predict the specified moment at which the specified satellite exists. The terminal 100 may perform the network search operation in the second network search mode at a moment that is preset network search duration 1 away from the specified moment; and/or when determining that the specified satellite exists at the current moment, the terminal 100 may predict the leaving moment at which the specified satellite leaves the visible range of the terminal 100. The terminal 100 may perform the network search operation in the first network search mode at a moment that is preset network search duration 2 away from the leaving moment. In this way, when the specified satellite is about to enter or leave the visible range of the terminal 100, the terminal 100 may perform the network search operation at a high network search frequency, thereby increasing a network search success rate.

The terminal 100 may perform the network search steps shown in FIG. 11 after disconnecting from a network. Alternatively, after receiving an input of enabling a satellite communication function by the user, the terminal 100 may perform, in response to the input, the network search steps shown in FIG. 11. Alternatively, the terminal 100 may perform the network search steps shown in FIG. 11 after being powered on. In embodiments of this application, that the terminal 100 disconnects from the network may be understood as that the terminal 100 disconnects from a radio access network of the satellite device 200.

In some examples, the terminal 100 is provided with a plurality of first network search modes, and change trends of the network search time intervals in different first network search modes are different. For example, maximum network search time intervals are different in different first network search modes, where the maximum network search time interval is a time interval with a maximum value between two adjacent network search operations in the network search mode, and is also referred to as a maximum network search interval. For another example, change trends of the time intervals are different in different first network search modes. For example, in a first network search mode, the time interval keeps unchanged and then decreases, and in a first network search mode, the time interval decreases and then keeps unchanged. For another example, in different first network search modes, time interval decrease amplitudes are different, namely, change trends of a time interval difference are different. For example, the plurality of first network search modes may include but are not limited to a first network search mode in which the time interval difference keeps unchanged and then decreases, a first network search mode in which the time interval difference increases and then decreases, a first network search mode in which the time interval difference increases, then keeps unchanged, and then decreases, a first network search mode in which the time interval difference decreases, and a first network search mode in which the time interval difference decreases and then keeps unchanged. In this way, the terminal 100 may select more appropriate first network search modes based on different application scenarios.

In some examples, after determining that no specified satellite exists, the terminal 100 may determine a to-be-used first network search mode based on the visible range. When the visible range is greater than a preset range, the terminal 100 may use a first network search mode with a small maximum network search interval. When the visible range is less than a preset range, the terminal 100 may use a first network search mode with a large maximum network search interval. For example, a maximum network search interval of the first network search mode with a small maximum network search interval is less than a preset network search interval (for example, 60s). For example, a maximum network search interval of the first network search mode with a large maximum network search interval is greater than a preset network search interval (for example, 60s). In this way, when the visible range of the terminal 100 is small, the specified satellite is far away from a boundary of the visible range of the terminal 100, and a network search success rate of the terminal 100 at the current moment is low. After long time, when the specified satellite moves near the visible range, a network search frequency may be increased. Therefore, using the first network search mode with a large maximum network search interval can ensure a network search success rate and reduce consumption of air interface resources of the terminal 100. When the visible range of the terminal 100 is large, there is a high probability that the specified satellite is close to a boundary of the visible range, and after short time, the specified satellite may move near the visible range. Therefore, the first network search mode with a small maximum network search interval is used, and network searching is performed at a high frequency when the specified satellite is near the visible range, thereby increasing a network search success rate.

In some other examples, after determining that no specified satellite exists, the terminal 100 may predict that the specified satellite exists at the specified moment. The terminal 100 may select a first network search mode based on a moving trajectory of the predicted specified satellite and the visible range of the terminal 100. The terminal 100 may determine, based on the moving trajectory of the predicted specified satellite and the visible range of the terminal 100, moving duration for the predicted specified satellite to enter the visible range of the terminal 100. When the moving duration is less than preset moving duration, the terminal 100 may use the first network search mode with a small maximum network search interval. When the moving duration is greater than preset moving duration, the terminal 100 may use the first network search mode with a large maximum network search interval. In this way, longer moving duration of the predicted specified satellite indicates a longer distance from the visible range of the terminal 100. In this case, a first network search mode with a low network search frequency is used. Shorter moving duration of the predicted specified satellite indicates a shorter distance from the visible range of the terminal 100. In this case, a first network search mode with a high network search frequency is used.

In some examples, when the moving duration of the predicted specified satellite is less than the preset moving duration, the terminal 100 may use a first network search mode in which a maximum network search interval is small and a time interval difference keeps unchanged and then decreases. When the moving duration of the predicted specified satellite is greater than the preset moving duration, the terminal 100 may use a first network search mode in which a maximum network search interval is large and a time interval difference decreases. In this way, when the predicted specified satellite is far away from the terminal 100, the terminal 100 may first perform network searching at a large time interval, and decrease the network search time interval as the predicted specified satellite approaches the terminal 100. When the predicted specified satellite is close to the terminal 100, the terminal 100 may first perform network searching at a small time interval, keep the small time interval unchanged within a period of time, and then decrease the network search time interval.

It should be noted that a plurality of preset moving duration may be set for the terminal 100. The terminal 100 may select a first network search mode based on a value relationship between the moving duration of the predicted specified satellite and the plurality of preset moving duration. Shorter moving duration of the predicted specified satellite indicates a smaller value of a maximum network search interval. Longer moving duration of the predicted specified satellite indicates a larger value of a maximum network search interval. In this way, the terminal 100 can reduce network search power consumption while increasing a network search success rate.

In some examples, after determining that no specified satellite exists, the terminal 100 may further determine a first network search mode based on a battery level of the terminal 100. For example, when the battery level is greater than a preset battery level (for example, 50%), the terminal 100 may select a first network search mode with a maximum network search interval with a small value. When the battery level is less than a preset battery level (for example, 50%), the terminal 100 may select a first network search mode with a maximum network search interval with a large value. In this way, when the battery level is sufficient, the terminal 100 may select a first network search mode with a high network search frequency. When the battery level is insufficient, the terminal 100 may select a first network search mode with a low network search frequency.

In some examples, after determining that no specified satellite exists, the terminal 100 may determine a first network search mode based on one or more of the visible range of the terminal 100, the moving duration of the predicted specified satellite, and the battery level of the terminal 100. A larger visible range of the terminal 100, and/or shorter moving duration of the predicted specified satellite, and/or a higher battery level of the terminal 100 indicate/indicates a smaller maximum network search interval in a first network search mode used by the terminal 100. A smaller visible range of the terminal 100, and/or longer predicted moving duration of the specified satellite, and/or a lower battery level of the terminal 100 indicate/indicates a larger value of a maximum network search interval in a first network search mode used by the terminal 100. In this way, a larger visible range of the terminal 100 indicates a higher probability that the distance between the predicted specified satellite and the visible range of the terminal 100 is shorter. When the predicted specified satellite is closer to the visible range of the terminal 100 and the battery level of the terminal 100 is higher, the terminal 100 may use a first network search mode with a higher network search frequency, thereby increasing a network search success rate. When the predicted specified satellite is farther from the visible range of the terminal 100 and the battery level of the terminal 100 is lower, the terminal 100 may use a first network search mode with a lower network search frequency, thereby reducing power consumption of the terminal 100 during network searching.

In some examples, a plurality of second network search modes are set for the terminal 100. Change trends of the time intervals at which the terminal 100 sends network search messages are different in different second network search modes. For example, maximum network search time intervals are different in different second network search modes. For another example, change trends of the time intervals are different in different second network search modes. For example, in a second network search mode, the time interval keeps unchanged and then increases, and in a second network search mode, the time interval first increases and then keeps unchanged. For another example, in different second network search modes, time interval increase amplitudes are different, namely, change trends of a time interval difference are different. For example, the plurality of second network search modes of the terminal 100 may include but are not limited to a second network search mode in which the time interval difference keeps unchanged and then increases, a second network search mode in which the time interval difference first increases and then decreases, a second network search mode in which the time interval difference first increases, then keeps unchanged, and then increases, a second network search mode in which the time interval difference increases, and a second network search mode in which the time interval difference first increases and then keeps unchanged.

In some examples, after determining that the specified satellite exists, the terminal 100 may select a to-be-used second network search mode from the plurality of second network search modes based on the visible range of the terminal 100. When the visible range of the terminal 100 is less than the preset range, the terminal 100 may use a second network search mode with a small maximum network search interval. When the visible range of the terminal 100 is greater than the preset range, the terminal 100 may use a second network search mode with a large maximum network search interval. In this way, because the visible range of the terminal 100 is small, the specified satellite leaves the visible range quickly, and network searching needs to be performed on the specified satellite at a higher network search frequency. When the visible range of the terminal 100 is large, the specified satellite leaves the visible range slowly, and network searching needs to be performed on the specified satellite at a lower network search frequency, thereby reducing power consumption of the terminal 100.

In some other examples, after determining that the specified satellite exists, the terminal 100 may select a second network search mode based on the moving trajectory of the specified satellite and the visible range of the terminal 100. Specifically, the terminal 100 may determine stay duration of the specified satellite within the visible range based on the moving trajectory of the specified satellite and the visible range of the terminal 100. When the stay duration is less than preset stay duration, the terminal 100 may use a second network search mode with a small maximum network search interval. When the stay duration is greater than preset stay duration, the terminal 100 may use a second network search mode with a large maximum network search interval.

Similarly, a plurality of preset stay duration may be set for the terminal 100. The terminal 100 may select a second network search mode based on a value relationship between the stay duration and the plurality of preset stay duration.

In some examples, after determining that the specified satellite exists, the terminal 100 may determine a second network search mode based on the battery level of the terminal 100. When the battery level is greater than the preset battery level (for example, 50%), the terminal 100 may select a second network search mode with a small maximum network search interval and/or a small minimum time interval. When the battery level is less than the preset battery level (for example, 50%), the terminal 100 may select a second network search mode with a large maximum network search interval and/or a large minimum time interval.

In some examples, after determining that the specified satellite exists, the terminal 100 may determine a second network search mode based on one or more of the visible range of the terminal 100, the moving duration, and the battery level of the terminal 100. A smaller visible range of the terminal 100, and/or shorter stay duration, and/or a higher battery level of the terminal 100 indicate/indicates a smaller maximum network search interval and/or minimum time interval in a second network search mode used by the terminal 100. A larger visible range of the terminal 100, and/or longer stay duration, and/or a lower battery level of the terminal 100 indicate/indicates a larger maximum network search interval and/or minimum time interval in a second network search mode used by the terminal 100.

In some examples, a plurality of network search modes are set for the terminal 100, and the plurality of network search modes include at least one first network search mode and at least one second network search mode. The terminal 100 may determine a to-be-used network search mode based on one or more of whether the specified satellite exists, the visible range of the terminal 100, the moving duration, and the battery level of the terminal 100. For details, refer to the foregoing embodiments. Details are not described herein again. For example, for the plurality of network search modes set by the terminal 100, refer to Table 1.

**Table 1: Example table of network search modes**

| Network search mode | Content of the network search mode |
|---|---|
| Network search mode 1 | Time interval between two network search operations: 30s, 30s, 15s, 3s, ... |
| Network search mode 2 | Time interval between two network search operations: 180s, 15s, 6s, 3s, ... |
| Network search mode 3 | Time interval between two network search operations: 3s, 15s, 30s, 30s, ... |
| Network search mode 4 | Time interval between two network search operations: 6s, 30s, 30s, 60s, ... |
| Network search mode 5 | Time interval between two network search operations: 3s, 6s, 15s, 180s, ... |
| Network search mode 6 | No network searching is performed after network disconnection, and an application processor is used for control |
| ... | ... |

For example, as shown in Table 1, the plurality of network search modes set for the terminal 100 include but are not limited to the network search mode 1, the network search mode 2, the network search mode 3, the network search mode 4, the network search mode 5, and the network search mode 6. In the plurality of first network search modes shown in Table 1, the time interval between the two network search operations gradually decreases. In the plurality of second network search modes shown in Table 1, the time interval between the two network search operations gradually increases.

When determining that no specified satellite exists at the current moment, the terminal 100 may perform the network search operation in the first network search mode. The terminal 100 may use the network search mode 2 with a larger initial interval when the battery level of the terminal 100 is lower, and/or the visible range of the terminal 100 is larger, and/or the moving duration of the predicted specified satellite is longer. The terminal 100 may use the network search mode 1 with a smaller initial network search interval when the battery level of the terminal 100 is higher, and/or the visible range of the terminal 100 is smaller, and/or the moving duration of the predicted specified satellite is shorter.

When determining that the specified satellite exists at the current moment, the terminal 100 may perform the network search operation in the second network search mode. The terminal 100 may use the network search mode 3 or the network search mode 4 with a larger network search interval range when the battery level of the terminal 100 is lower, and/or the visible range of the terminal 100 is larger, and/or the stay duration of the specified satellite is longer. When the visible range of the terminal 100 is small, the network search mode 3 may be preferentially used. When the visible range of the terminal 100 is large, the network search mode 4 may be preferentially used.

The terminal 100 may use the network search mode 4 or the network search mode 5 with a larger network search interval range when the battery level of the terminal 100 is higher, and/or the visible range of the terminal 100 is smaller, and/or the stay duration is shorter. When the visible range of the terminal 100 is small, the network search mode 5 may be preferentially used. When the visible range of the terminal 100 is large, the network search mode 4 may be preferentially used.

In some examples, the terminal 100 includes the network search mode 6 shown in Table 1. The terminal 100 stops network searching in the network search mode 6. The terminal 100 may perform network searching in the network search mode 6 when determining that no specified satellite exists at the current moment and no specified satellite exists within the first preset duration. In some examples, when detecting that a position movement distance of the terminal 100 is greater than a preset re-search distance, the terminal 100 may perform network searching by performing the steps shown in FIG. 11. For example, when detecting, through the application processor, that a position movement distance of the terminal 100 is greater than a preset re-search distance, the terminal 100 may perform network searching by performing the steps shown in FIG. 11.

It should be noted that specific time intervals of the plurality of network search modes shown in Table 1 are merely examples, and do not constitute a limitation on the plurality of network search modes set for the terminal 100. When having more network search modes, the terminal 100 may also determine a to-be-used network search mode with reference to the foregoing embodiments.

In some examples, N-1 time intervals between first network searching and N^{th} network searching in a network search mode belong to a network search time interval range 1. M-N time intervals between the N^{th} network searching and M^{th} network searching in the network search mode belong to a network search time interval range 2, and so on. N is greater than or equal to 1, and M is greater than N. The terminal 100 may determine, based on one or more of whether the specified satellite exists, the battery level of the terminal 100, the visible range of the terminal 100, and the moving trajectory of the specified satellite, values of N and M and a corresponding network search interval range, that is, determine a to-be-used network search mode.

For example, when determining that no specified satellite exists, the terminal 100 predicts that the specified satellite exists at the specified moment. If the terminal 100 determines that the moving duration of the predicted specified satellite is long, the terminal 100 may use a first network search mode in which the value of N is small and a time interval in the network search time interval range 1 is large and/or the value of M is large and a time interval in the network search time interval range 2 is small. In this way, when the predicted specified satellite is far away from the visible range, the terminal 100 may perform network searching at a low network search frequency. When the predicted specified satellite is close to the visible range, the terminal 100 performs network searching at a high network search frequency. Similarly, if the terminal 100 determines that the moving duration of the predicted specified satellite is short, the terminal 100 may use a first network search mode in which the time interval in the network search time interval range 1 is small and/or the time interval in the network search time interval range 2 is small.

If the terminal 100 determines that the battery level of the terminal 100 is high, the terminal 100 may use a first network search mode in which the time interval in the network search time interval range 1 is small and/or the time interval in the network search time interval range 2 is small. In this way, when the battery level is sufficient, the terminal 100 may perform network searching at a high network search frequency. Similarly, if the terminal 100 determines that the battery level of the terminal 100 is low, the terminal 100 may use a first network search mode with a large time interval in the network search time interval range 1. In this way, when the specified satellite is far away from the visible range, the terminal 100 may perform network searching at a low network search frequency, thereby reducing power consumption of the terminal 100, and the like.

In a possible implementation, the terminal 100 may adjust a network search time interval based on the visible range of the terminal 100 and the moving trajectory of the specified satellite. For example, the terminal 100 determines that no specified satellite exists at the current moment. The terminal 100 determines, through prediction, that the specified satellite appears in the visible range of the terminal 100 at the specified moment. The terminal 100 may determine the network search time interval based on a moving trajectory of the predicted specified satellite from the current moment and the visible range.

For example, the terminal 100 may search for a signal of the satellite device 200 at the current moment at the network search time interval 1. The terminal 100 may gradually decrease the network search time interval in a process in which the predicted specified satellite moves to the visible range, until the predicted specified satellite enters the visible range of the terminal 100.

The terminal 100 may gradually increase the network search time interval after the specified satellite enters the visible range of the terminal 100. In this way, after the specified satellite moves to the visible range, and after the terminal 100 fails to perform network searching a plurality of times through the specified satellite, the terminal 100 tends to consider that a network search failure rate for the specified satellite is high, and continues to perform network searching at a large network search time interval.

The terminal 100 may gradually decrease the network search time interval when a time difference between the current moment and the leaving moment at which the specified satellite leaves the visible range of the terminal 100 is less than the preset network search duration 2. In this way, when detecting that the specified satellite is about to leave the visible range of the terminal 100, the terminal 100 may decrease the network search time interval, to strive to successfully find a network before the specified satellite leaves the visible range.

It may be understood that, after the specified satellite leaves the visible range of the terminal 100, the terminal 100 may detect whether another specified satellite exists in the visible range of the terminal 100, and adjust the network search time interval according to the foregoing embodiments. In this way, the terminal 100 may adjust the network search time interval based on a relative position relationship between the satellite and the visible range of the terminal 100, thereby increasing a network search success rate while reducing power consumption of the terminal 100.

The following describes the terminal 100 provided in an embodiment of this application.

The terminal 100 may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and/or a smart city device. A specific type of the terminal 100 is not specifically limited in embodiments of this application.

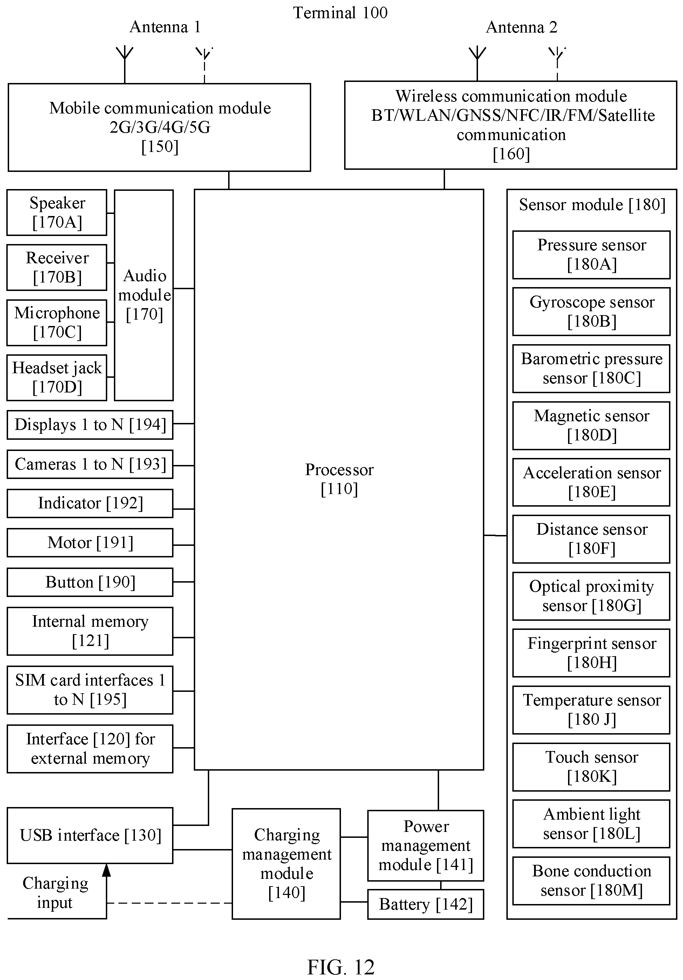

FIG. 12 is a diagram of a structure of the terminal 100.

The following specifically describes embodiments by using the terminal 100 as an example. It should be understood that the terminal 100 shown in FIG. 1 is merely an example, and the terminal 100 may have more or fewer components than those shown in FIG. 1, two or more components may be combined, or there may be different component configurations. Various components shown in the figure may be implemented by hardware including one or more signal processing and/or application-specific integrated circuits, software, or a combination of hardware and software.

The terminal 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the terminal 100. In some other embodiments of this application, the terminal 100 may include more or fewer components than those shown in the figure, or some components may be combined, or some components may be split, or there may be a different component layout. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the terminal 100. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that an interface connection relationship between the modules shown in this embodiment of this application is merely an example for description, and constitutes no limitation on the structure of the terminal 100. In some other embodiments of this application, the terminal 100 may alternatively use an interface connection manner different from that in the foregoing embodiment, or may use a combination of a plurality of interface connection manners.

The charging management module 140 is configured to receive charging input from a charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the terminal 100. The charging management module 140 may supply power to the terminal 100 through the power management module 141 while charging the battery 142.

The power management module 141 is configured to be connected to the battery 142, the charging management module 140, and the processor 110. The power management module 141 receives input of the battery 142 and/or the charging management module 140, to supply power to the processor 110, the internal memory 121, an external memory, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the terminal 100 may be implemented by using the antenna 1, the antenna 2, the mobile communication module 150, the wireless communication module 160, the modem processor, the baseband processor, and the like. The antenna 1 and the antenna 2 are configured to transmit and receive an electromagnetic wave signal. Each antenna in the terminal 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that includes 2G/3G/4G/5G or the like and that is applied to the terminal 100 The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio device (which is not limited to the speaker 170A, the receiver 170B, or the like), or displays an image or a video by the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the terminal 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, satellite communication, and the like. The wireless communication module 160 may be one or more components integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

The wireless communication module 160 may be configured to process a signal sent by the terminal 100 to the satellite device 200. The wireless communication module 160 may be further configured to process a signal from the satellite device 200.

In some embodiments, in the terminal 100, the antenna 1 and the mobile communication module 150 are coupled, and the antenna 2 and the wireless communication module 160 are coupled, so that the terminal 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The terminal 100 may implement a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD). The display panel may alternatively be an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diode, QLED), or the like. In some embodiments, the terminal 100 may include 1 or N displays 194, where N is a positive integer greater than 1.

The terminal 100 may implement a photographing function by using the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and the like of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert it into a digital image signal. The ISP outputs the digital image signal to the DSP for processing. The DSP converts the digital image signal into an image signal in a standard format such as RGB or YUV. In some embodiments, the terminal 100 may include one or N cameras 193, where N is a positive integer greater than 1.

The digital signal processor is configured to process a digital signal, and may process another digital signal in addition to the digital image signal. For example, when the terminal 100 selects a frequency, the digital signal processor is configured to perform Fourier transformation on frequency energy.

The video codec is configured to compress or decompress a digital video. The terminal 100 may support one or more video codecs. In this way, the terminal 100 can play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a mode of transfer between human brain neurons, and may further continuously perform self-learning. Applications such as intelligent cognition of the terminal 100 may be implemented through the NPU, for example, image recognition, facial recognition, speech recognition, and text understanding.

The external memory interface 120 may be used to connect to an external memory card, for example, a micro SD card, to extend a storage capability of the terminal 100. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to implement various function applications and data processing of the terminal 100. The internal memory 121 may include a program storage area and a data storage area. The program storage area may store an operating system, an application required by at least one function (for example, a voice playing function or an image playing function), and the like. The data storage area may store data (for example, audio data and a phone book) and the like created when the terminal 100 is used. In addition, the internal memory 121 may include a highspeed random access memory, or may include a nonvolatile memory, for example, at least one magnetic disk storage device, a flash memory, or a universal flash storage (universal flash storage, UFS).

The terminal 100 may implement an audio function such as music playing or recording via the audio module 170, the speaker 170A, the receiver 170B, the microphone 170C, the headset jack 170D, the application processor, and the like. The audio module 170 is configured to convert digital audio information into an analog audio signal for output, and is also configured to convert analog audio input into a digital audio signal. The audio module 170 may be further configured to code and decode an audio signal. In some embodiments, the audio module 170 may be disposed in the processor 110, or some functional modules in the audio module 170 are disposed in the processor 110. The speaker 170A, also referred to as a "loudspeaker", is configured to convert an audio electrical signal into a sound signal. The receiver 170B, also referred to as an "earpiece", is configured to convert an electrical audio signal into a sound signal. The microphone 170C, also referred to as a "mike" or a "mic", is configured to convert a sound signal into an electrical signal. The headset jack 170D is configured to connect to a wired headset.

The pressure sensor 180A is configured to sense a pressure signal, and can convert the pressure signal into an electrical signal. In some embodiments, the pressure sensor 180A may be disposed on the display 194. The gyroscope sensor 180B may be configured to determine a motion attitude of the terminal 100. The barometric pressure sensor 180C is configured to measure barometric pressure. The magnetic sensor 180D includes a Hall sensor. The terminal 100 may detect opening and closing of a flip cover by using the magnetic sensor 180D. The acceleration sensor 180E may detect accelerations of the terminal 100 in various directions (usually on three axes). The distance sensor 180F is configured to measure a distance. The optical proximity sensor 180G may include, for example, a light emitting diode (LED) and an optical detector. The terminal 100 may detect, through the optical proximity sensor 180G, that a user holds the terminal 100 close to an ear for a call, to automatically turn off a screen for saving power. The ambient light sensor 180L is configured to sense ambient light brightness. The fingerprint sensor 180H is configured to collect a fingerprint. The temperature sensor 180J is configured to detect a temperature. The touch sensor 180K is also referred to as a touch panel. The touch sensor 180K may be disposed on the display 194. The touch sensor 180K and the display 194 form a touchscreen, which is also referred to as a "touchscreen". The bone conduction sensor 180M may obtain a vibration signal. The button 190 includes a power button, a volume button, and the like. The button 190 may be a mechanical button, or may be a touch-sensitive button. The motor 191 may generate a vibration prompt. The indicator 192 may be an indicator light, and may be configured to indicate a charging status and a power change, or may be configured to indicate a message, a missed call, a notification, and the like. The SIM card interface 195 is configured to connect to a SIM card.

The following describes a communication apparatus 1300 according to an embodiment of this application.

In a possible product form, any network element (for example, the satellite 21, the satellite ground device 22, or the satellite operation server 23) in the satellite device 200 described in embodiments of this application may be implemented by using a general bus architecture.

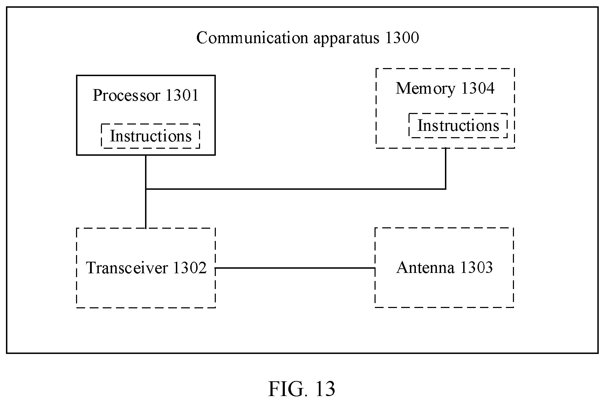

FIG. 13 is a diagram of a structure of the communication apparatus 1300 according to an embodiment of this application. The communication apparatus 1300 may be the satellite device 200 or an apparatus in the satellite device. As shown in FIG. 13, the communication apparatus 1300 includes a processor 1301 and a transceiver 1302 that is internally connected to and communicates with the processor. The processor 1301 may be a general-purpose processor, a dedicated processor, or the like, for example, may be a baseband processor or a central processing unit for satellite communication. The baseband processor for satellite communication may be configured to process a satellite communication protocol and satellite communication data, and the central processing unit may be configured to control a communication apparatus (for example, a baseband chip, and the like), execute a computer program, and process data of the computer program. The transceiver 1302 may be referred to as a transceiver unit, a transceiver machine, a transceiver circuit, or the like, and is configured to implement a transceiver function. The transceiver 1302 may include a receiver and a transmitter. The receiver may be referred to as a receiving machine, a receiver circuit, or the like, and is configured to implement a receiving function. The transmitter may be referred to as a transmitting machine, a transmitter circuit, or the like, and is configured to implement a sending function. Optionally, the communication apparatus 1300 may further include an antenna 1303 and/or a radio frequency unit (not shown in the figure). The antenna 1303 and/or the radio frequency unit may be located inside the communication apparatus 1300, or may be separated from the communication apparatus 1300, that is, the antenna 1303 and/or the radio frequency unit may be deployed remotely or deployed in a distributed manner.

Optionally, the communication apparatus 1300 may include one or more memories 1304. The memory 1304 may store instructions. The instructions may be a computer program, and the computer program may be run on the communication apparatus 1300, so that the communication apparatus 1300 performs the method described in the foregoing method embodiments. Optionally, the memory 1304 may further store data. The communication apparatus 1300 and the memory 1304 may be separately disposed, or may be integrated.

The processor 1301, the transceiver 1302, and the memory 1304 may be connected through a communication bus.

In a design, the communication apparatus 1300 may be configured to perform functions of the satellite device 200 in the foregoing embodiments. The processor 1301 may be configured to perform the function steps related to protocol parsing and encapsulation and operation determining performed by the satellite device 200 in the embodiments shown in FIG. 4, FIG. 7, and FIG. 11, and/or another process of the technology described in this specification. The transceiver 1302 may be configured to perform the function steps related to sending and receiving by the satellite device 200 in the embodiments shown in FIG. 4, FIG. 7, and FIG. 11, and/or another process of the technology described in this specification.

In any one of the foregoing designs, the processor 1301 may include a transceiver configured to implement sending and receiving functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A communication method, applied to a terminal, wherein the method comprises:
receiving, at a first moment, a first input for sending uplink data to a satellite device; and
in response to the first input, sending the uplink data to a first satellite of the satellite device at a second moment if an included angle between a horizontal plane and a direction of a line of sight between any one of all satellites of the satellite device and the terminal is less than a preset angle and/or there is an obstruction in the direction of the line of sight between the satellite and the terminal, wherein at the second moment, an included angle between the horizontal plane and a direction of a line of sight between the first satellite and the terminal is greater than the preset angle and there is no obstruction in the direction of the line of sight between the first satellite and the terminal, and the second moment is later than the first moment.

2. The method according to claim 1, wherein the method further comprises:
in response to the first input, sending the uplink data to the first satellite if the included angle between the horizontal plane and the direction of the line of sight between the first satellite and the terminal is greater than the preset angle and there is no obstruction in the direction of the line of sight between the first satellite and the terminal.

3. The method according to claim 1 or 2, wherein the method further comprises:
in response to the first input, performing network searching in a first network search mode if the included angle between the horizontal plane and the direction of the line of sight between any one of all the satellites of the satellite device and the terminal is less than the preset angle and/or there is an obstruction in the direction of the line of sight between the satellite and the terminal, wherein the terminal performs network searching at a third moment, a fourth moment, and a fifth moment in the first network search mode, a first time interval between the fourth moment and the third moment is greater than a second time interval between the fifth moment and the fourth moment, the third moment is earlier than the fourth moment, and the fourth moment is earlier than the fifth moment.

4. The method according to any one of claims 1 to 3, wherein the method further comprises:
in response to the first input, performing network searching in a second network search mode if the included angle between the horizontal plane and the direction of the line of sight between the first satellite and the terminal is greater than the preset angle and there is no obstruction in the direction of the line of sight between the first satellite and the terminal, wherein the terminal performs network searching at a sixth moment, a seventh moment, and an eighth moment in the second network search mode, a third time interval between the seventh moment and the sixth moment is less than a fourth time interval between the eighth moment and the seventh moment, the sixth moment is earlier than the seventh moment, and the seventh moment is earlier than the eighth moment.

5. The method according to claim 3 or 4, wherein before receiving the first input for sending the uplink data to the satellite device, the method further comprises:
disconnecting, by the terminal, from the satellite device.

6. The method according to any one of claims 3 to 5, wherein in response to the first input, performing network searching in the first network search mode if the included angle between the horizontal plane and the direction of the line of sight between any one of all the satellites of the satellite device and the terminal is less than the preset angle and/or there is an obstruction in the direction of the line of sight between the satellite and the terminal specifically comprises:
in response to the first input, performing network searching in the first network search mode if the included angle between the horizontal plane and the direction of the line of sight between any one of all the satellites of the satellite device and the terminal is less than the preset angle and/or there is an obstruction in the direction of the line of sight between the satellite and the terminal, and a first condition is met, wherein
the first condition comprises:
a battery level of the terminal is less than a preset battery level, and/or a visible range of the terminal is less than a preset range, and/or duration in which the first satellite moves to the visible range of the terminal is greater than preset duration, wherein there is no obstruction in a direction of a line of sight between a satellite within the visible range of the terminal and the terminal, and there is an obstruction in a direction of a line of sight between a satellite outside the visible range of the terminal and the terminal.

7. The method according to claim 6, wherein the method further comprises:
in response to the first input, performing network searching in the third network search mode if the included angle between the horizontal plane and the direction of the line of sight between any one of all the satellites of the satellite device and the terminal is less than the preset angle and/or there is an obstruction in the direction of the line of sight between the satellite and the terminal, and a second condition is met, wherein a change trend of a time interval for network searching in the third network search mode is different from a change trend of a time interval for network searching in the first network search mode; and
the second condition comprises:
the battery level of the terminal is greater than the preset battery level, and/or the visible range of the terminal is greater than the preset range, and/or the duration in which the first satellite moves to the visible range of the terminal is less than the preset duration.

8. The method according to claim 7, wherein the terminal performs network searching at a ninth moment, a tenth moment, and an eleventh moment in the third network search mode, a fifth time interval between the tenth moment and the ninth moment is greater than a sixth time interval between the eleventh moment and the tenth moment, the ninth moment is earlier than the tenth moment, the tenth moment is earlier than the eleventh moment; and the first time interval is greater than the fifth time interval.

9. The method according to any one of claims 1 to 8, wherein the method further comprises:
in response to the first input, displaying first prompt information if the included angle between the horizontal plane and the direction of the line of sight between any one of all the satellites of the satellite device and the terminal is less than the preset angle and/or there is an obstruction in the direction of the line of sight between the satellite and the terminal, wherein the first prompt information indicates to a user that the uplink data fails to be sent.

10. The method according to claim 9, wherein the first prompt information further indicates the user to send the uplink data at the second moment.

11. The method according to any one of claims 1 to 10, wherein the method further comprises:
obtaining position information of the terminal and position information of all the satellites of the satellite device; and
determining, based on the position information of the terminal and the position information of all the satellites of the satellite device, directions of lines of sight between all the satellites of the satellite device and the terminal.

12. The method according to claim 11, wherein the method further comprises:
determining the visible range of the terminal based on the position information of the terminal and preset map information, wherein there is no obstruction in the direction of the line of sight between the satellite within the visible range of the terminal and the terminal, and there is an obstruction in the direction of the line of sight between the satellite outside the visible range of the terminal and the terminal; and
determining, based on the position information of all the satellites of the satellite device and the visible range of the terminal, whether there are obstructions in the directions of the lines of sight between all the satellites of the satellite device and the terminal.

13. The method according to any one of claims 1 to 12, wherein in response to the first input, sending the uplink data to the first satellite of the satellite device at the second moment if the included angle between the horizontal plane and the direction of the line of sight between any one of all the satellites of the satellite device and the terminal is less than the preset angle and/or there is an obstruction in the direction of the line of sight between the satellite and the terminal specifically comprises:
in response to the first input, determining that a satellite network service status of the terminal is normal, and sending the uplink data to the first satellite at the second moment if the included angle between the horizontal plane and the direction of the line of sight between any one of all the satellites of the satellite device and the terminal is less than the preset angle and/or there is an obstruction in the direction of the line of sight between the satellite and the terminal.

14. The method according to any one of claims 1 to 13, wherein the method further comprises:
in response to the first input, displaying second prompt information if, within preset waiting duration, an included angle between the horizontal plane and a direction of a first line of sight between any one of all the satellites of the satellite device and the terminal is less than the preset angle and/or there is an obstruction in the direction of the line of sight between the satellite and the terminal, wherein the second prompt information indicates the user to send the uplink data after changing a position for sending the uplink data.

15. A communication method, applied to a satellite device, wherein the method comprises:
receiving downlink data sent to a terminal; and
sending a paging message to the terminal in a first paging mode if an included angle between a horizontal plane and a direction of a line of sight between any one of all satellites of the satellite device and the terminal is less than a preset angle and/or there is an obstruction in the direction of the line of sight between the satellite and the terminal, wherein the terminal performs paging at a first moment, a second moment, and a third moment in the first paging mode, a first time interval between the second moment and the first moment is greater than a second time interval between the third moment and the second moment, the first moment is earlier than the second moment, and the second moment is earlier than the third moment.

16. The method according to claim 15, wherein the method further comprises:
sending a paging message to the terminal in a second paging mode if included angles between the horizontal plane and directions of lines of sight of all the satellites of the satellite device are less than the preset angle and/or there are obstructions in the directions of the lines of sight, wherein the terminal performs paging at a fourth moment, a fifth moment, and a sixth moment in the second paging mode, a third time interval between the fifth moment and the fourth moment is less than a fourth time interval between the sixth moment and the fifth moment, the fourth moment is earlier than the fifth moment, and the fifth moment is earlier than the sixth moment.

17. The method according to claim 15 or 16, wherein the method further comprises:
sending a first message to a calling device that sends the downlink data, wherein the first message indicates the calling device to prolong paging waiting duration.

18. A terminal, comprising one or more processors, one or more memories, and one or more transceivers, wherein the one or more transceivers and the one or more memories are coupled to the one or more processors, the one or more memories are configured to store a computer-executable program, and when the one or more processors execute the computer-executable program, the terminal is caused to perform the method according to any one of claims 1 to 14.

19. A computer-readable storage medium, storing a computer program, wherein when the computer program runs on a terminal, the terminal is caused to perform the method according to any one of claims 1 to 14.

20. A chip, used in a terminal, comprising a processing circuit and an interface circuit, wherein the interface circuit is configured to receive code instructions and transmit the code instructions to the processing circuit, and the processing circuit is configured to run the code instructions to perform the method according to any one of claims 1 to 14.

21. A computer program product, wherein when the computer program product runs on a terminal, the terminal is caused to perform the method according to any one of claims 1 to 14.

22. A satellite device, comprising one or more processors, one or more memories, and one or more transceivers, wherein the one or more transceivers and the one or more memories are coupled to the one or more processors, the one or more memories are configured to store a computer-executable program, and when the one or more processors execute the computer-executable program, the satellite device is caused to perform the method according to any one of claims 15 to 17.

23. A computer-readable storage medium storing a computer program, wherein when the computer program runs on a satellite device, the satellite device is caused to perform the method according to any one of claims 15 to 17.

24. A computer program product, wherein when the computer program product runs on a satellite device, the satellite device is caused to perform the method according to any one of claims 15 to 17.
